(19) **Europäisches Patentamt / European Patent Office / Office européen des brevets**

(11) **EP 3 172 530 B1**

(12) **EUROPÄISCHE PATENTSCHRIFT**

(45) Veröffentlichungstag und Bekanntmachung des Hinweises auf die Patenterteilung:
**23.05.2018 Patentblatt 2018/21**

(21) Anmeldenummer: **15756815.5**

(22) Anmeldetag: **22.07.2015**

(51) Int Cl.:
**G01B 11/26** *(2006.01)* **B21D 5/02** *(2006.01)*

(86) Internationale Anmeldenummer:
**PCT/AT2015/050176**

(87) Internationale Veröffentlichungsnummer:
**WO 2016/011472 (28.01.2016 Gazette 2016/04)**

(54) **BIEGEWINKELMESSVORRICHTUNG UND VERFAHREN ZUM MESSEN EINES BIEGEWINKELS MITTELS DER BIEGEWINKELMESSVORRICHTUNG**

BENDING ANGLE MEASURING APPARATUS AND METHOD FOR MEASURING A BENDING ANGLE BY MEANS OF THE BENDING ANGLE MEASURING APPARATUS

DISPOSITIF DE MESURE D'ANGLE DE CINTRAGE ET PROCÉDÉ DE MESURE D'ANGLE DE CINTRAGE AU MOYEN DE CE DISPOSITIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.07.2014 AT 505152014**

(43) Veröffentlichungstag der Anmeldung:
**31.05.2017 Patentblatt 2017/22**

(73) Patentinhaber: **TRUMPF Maschinen Austria GmbH & Co. KG.**
**4061 Pasching (AT)**

(72) Erfinder:
• **ANGERER, Gerhard**
 **A-4203 Altenberg (AT)**
• **FREUDENTHALER, Klemens**
 **A-4020 Linz (AT)**
• **HAUSMANN, Florian**
 **A-4050 Traun (AT)**
• **HÖRL, Matthias**
 **4020 Linz (AT)**
• **KOVJENIC, Nenad**
 **A-4040 Linz (AT)**
• **MAIER, Florian**
 **A-4060 Leonding (AT)**
• **THEIS, Helmut**
 **A-4540 Pfarrkirchen (AT)**
• **WALDHERR, Manfred**
 **A-4040 Linz (AT)**

(74) Vertreter: **Burger, Hannes**
**Anwälte Burger & Partner Rechtsanwalt GmbH**
**Rosenauerweg 16**
**4580 Windischgarsten (AT)**

(56) Entgegenhaltungen:
**EP-A1- 1 102 032 JP-A- H01 199 104**
**JP-A- S59 160 708 JP-A- 2002 059 217**

EP 3 172 530 B1

**Beschreibung**

Die Erfindung betrifft eine Biegewinkelmessvorrichtung, sowie eine mit der Biegewinkelmessvorrichtung ausgestattete Biegemaschine bzw. ein Verfahren zum Messen eines Biegewinkels mittels der Biegewinkelmessvorrichtung, wie dies in den Ansprüchen 1, 17 und 18 angegeben ist.

Aus der EP 0 915 320 B1 ist ein Verfahren, sowie eine Vorrichtung zur optischen Bestimmung eines Biegewinkels in einem Blechwerkstück während des Biegevorganges mit einer Abkantpresse bekannt. Zur Bestimmung des Biegewinkels wird von einer Lichtquelle welche an einer verschwenkbaren Winkelmessvorrichtung angeordnet ist, ein gerichteter Lichtstrahl auf das Messobjekt abgestrahlt, vom Messobjekt reflektiert, und von zwei optischen Sensoren, welche ebenfalls an der verschwenkbaren Winkelmessvorrichtung angeordnet sind, aufgefangen. Die Winkelmessvorrichtung wird während des Messvorganges in einer zur Biegelinie parallelen Achse verschwenkt, wobei die auf einem optischen Sensor auftreffende Lichtintensität ihr Maximum erreicht, wenn der von der Lichtquelle emittierte gerichtete Lichtstrahl von der Oberfläche des Messobjektes reflektiert wird und genau auf einen der beiden Sensoren trifft. Während diesem Verschwenkvorgang der Winkelmessvorrichtung wird ständig die aktuelle Winkellage der Winkelmessvorrichtung mitprotokolliert. Die beiden Sensoren sind jeweils in gleich großem Abstand von der Lichtquelle an der Winkelmessvorrichtung angeordnet, sodass jeweils bei gleichem Relativwinkel zur Senkrechten von Lichtquelle auf die Oberfläche des Messobjektes, das Maximum der Lichtintensität erreicht wird. Dadurch dass die Sensoren in gleich großem Abstand von der Lichtquelle an der Winkelmessvorrichtung angeordnet sind, lässt sich das Mittel, und dadurch die Senkrechte auf die Oberfläche des Messobjektes bestimmen.

Die EP 0 915 320 B1 weist den Nachteil auf, dass die Winkelmessvorrichtung zur Bestimmung des Biegewinkels ständig verschwenkt werden muss, sodass diese einen komplexen mechanischen Aufbau aufweist, welcher wartungsintensiv und fehleranfällig ist. Darüber hinaus kann der Biegewinkel nicht zeitnah während des Biegevorganges erfasst werden.

Aus der JP 2002 059217 A ist eine einen rotierenden Spiegel aufweisende Biegewinkelmessvorrichtung für eine Biegemaschine bekannt. Der vorliegenden Erfindung liegt die Aufgabe zugrunde eine Biegewinkelmessvorrichtung zu schaffen, welche möglichst einfach aufgebaut ist und berührungsfrei eine präzise und schnelle Bestimmung des Biegewinkels zulässt.

Diese Aufgabe der Erfindung wird durch die Maßnahmen gemäß den Ansprüchen 1, 17 und 18 gelöst.

Erfindungsgemäß ist gemäß Anspruch 1 eine Biegewinkelmessvorrichtung für eine Biegemaschine, insbesondere Abkantpresse ausgebildet, wobei ein zu biegendes Blechteil in der Biegemaschine angeordnet ist, welches Blechteil einen ersten und einen zweiten Schenkel und eine zwischen den beiden Schenkel liegende Biegekante aufweist, wobei die Biegewinkelmessvorrichtung eine Beleuchtungsvorrichtung mit zumindest einer Lichtquelle und ein optisches Erfassungsmittel mit einer Lichterfassungsfläche aufweist. An der Biegewinkelmessvorrichtung ist zumindest ein rotationssymmetrischer Körper mit einer spiegelnden Oberfläche angeordnet, wobei eine Mittelachse des rotationssymmetrischen Körpers parallel zur Biegekante ausgerichtet angeordnet ist, wobei ein von der Beleuchtungsvorrichtung ausgesandter erster Lichtstrahl vom Blechteil reflektiert und als zweiter Lichtstrahl zum rotationssymmetrischen Körper geleitet wird und der zweite Lichtstrahl am rotationssymmetrischen Körper reflektiert und als dritter Lichtstrahl zum optischen Erfassungsmittel, insbesondere auf dessen Lichterfassungsfläche geleitet wird. Ein Vorteil der erfindungsgemäßen Biegewinkelmessvorrichtung liegt darin, dass diese dazu geeignet ist, den Biegewinkel eines zu biegenden Blechteiles berührungsfrei zu bestimmen, wobei die Biegewinkelmessvorrichtung keine sich bewegenden Teile aufweist. Dadurch kann der Wartungsaufwand für den Betrieb der Biegewinkelmessvorrichtung minimiert werden. Weiters weist die Biegewinkelmessvorrichtung dadurch eine erhöhte Lebensdauer, beziehungsweise eine verminderte Fehleranfälligkeit auf, da durch die Vermeidung der sich bewegenden Teile ein mechanischer Verschleiß, sowie das Erfordernis nach Aktoren vermieden wird. Besonders unter Einsatz eines rotationssymmetrischen Körpers mit einer spiegelnden Oberfläche kann das vom Blechteil reflektierte Licht gut auf das optische Erfassungsmittel projiziert werden, um die aktuelle Winkellage des Blechteiles mit einer hohen Genauigkeit bestimmen zu können.

Weiters kann es zweckmäßig sein, wenn die Lichterfassungsfläche des optischen Erfassungsmittels zweidimensional ausgebildet ist und normal auf die Mittelachse des rotationssymmetrischen Körpers stehend angeordnet ist, wobei das Zentrum der Lichterfassungsfläche des optischen Erfassungsmittels vorzugsweise auf der Mittelachse des rotationssymmetrischen Körpers liegt. Von Vorteil ist hierbei, dass der Lichtstrahl, welcher vom rotationssymmetrischen Körper reflektiert wird direkt auf die Lichterfassungsfläche des optischen Erfassungsmittels geleitet werden kann, wobei die Lichterfassungsfläche so angeordnet ist, dass der Lichtstrahl optisch gut dargestellt werden kann, um daraus den aktuellen Biegewinkel ableiten zu können.

Ferner kann vorgesehen sein, dass die Beleuchtungsvorrichtung, der rotationssymmetrische Körper und das optische Erfassungsmittel auf einer gemeinsamen Achse, insbesondere parallel zur Biegelinie angeordnet sind. Von Vorteil ist hierbei, dass dadurch eine einfache Strahlenführung möglich ist, da zum rotationssymmetrischen Körper keine zusätzlichen optischen Umlenkmittel benötigt werden, um die von der Beleuchtungsvorrichtung abgegebenen Strahlen an das optische Erfassungsmittel zu leiten und dadurch den aktuellen Biegewinkel des Blechteiles darzustellen.

Gemäß einer Weiterbildung ist es möglich, dass an der Biegewinkelmessvorrichtung ein Strahlteiler in einem Winkel von 45° oder ein erster Spiegel in einem Winkel von 45° zur Mittelachse des rotationssymmetrischen Körpers angeordnet ist, wobei das Zentrum des ersten Spiegels vorzugsweise auf der Mittelachse des rotationssymmetrischen Körpers liegt, wodurch ein von der Beleuchtungsvorrichtung im Winkel von 90° zur Mittelachse erzeugter erster Lichtstrahl dermaßen abgelenkt ist, dass er im Wesentlichen parallel zur Mittelachse des rotationssymmetrischen Körpers verläuft, wobei die Beleuchtungsvorrichtung ebenfalls im Winkel von 90° zur Mittelachse angeordnet ist. Von Vorteil ist hierbei, dass dadurch erreicht werden kann, dass die Biegewinkelmessvorrichtung möglichst platzsparend gebaut werden kann, sodass sie gut in eine Biegemaschine integriert werden kann, ohne dabei den Biegeprozess zu behindern. Weiters kann vorgesehen sein, dass die Beleuchtungsvorrichtung in einem anderen Winkel als 90° zur Mittelachse angeordnet ist. Hierbei ist wichtig, dass der erste Spiegel, oder der Strahlteiler in einem den Winkel der Beleuchtungsvorrichtung halbierenden Winkel angeordnet sind.

In einer Weiterbildung kann vorgesehen sein, dass an der Biegewinkelmessvorrichtung ein Strahlteiler oder ein zweiter Spiegel in einem Winkel von 45° zur Mittelachse des rotationssymmetrischen Körpers angeordnet ist, wobei das Zentrum des zweiten Spiegels vorzugsweise auf der Mittelachse des rotationssymmetrischen Körpers liegt, wodurch der vom rotationssymmetrischen Körper abgelenkte und parallel zur Mittelachse verlaufende dritte Lichtstrahl in einem Winkel von 90° zur Mittelachse abgelenkt ist, wobei das optische Erfassungsmittel ebenfalls im Winkel von 90° zur Mittelachse angeordnet ist. Von Vorteil ist hierbei, dass dadurch erreicht werden kann, dass die Biegewinkelmessvorrichtung möglichst platzsparend gebaut werden kann, sodass sie gut in eine Biegemaschine integriert werden kann, ohne dabei den Biegeprozess zu behindern. Weiters kann vorgesehen sein, dass das optische Erfassungsmittel in einem anderen Winkel als 90° zur Mittelachse angeordnet ist. Hierbei ist wichtig, dass der zweite Spiegel, oder der Strahlteiler in einem den Winkel des optischen Erfassungsmittels halbierenden Winkel angeordnet sind.

Vorteilhaft ist auch eine Ausprägung, gemäß welcher vorgesehen sein kann, dass in der Beleuchtungsvorrichtung eine im Wesentlichen punktförmige Lichtquelle, wie etwa eine LED, ausgebildet ist. Eine LED kann einfach angesteuert werden und kann auf kleinstem Raum das benötigte Licht erzeugen. Weiters kann eine LED dermaßen ausgebildet werden, dass sie möglichst als annähernd punktförmige Lichtquelle, und nicht als Flächenstrahler betrachtet werden kann.

Weiters kann vorgesehen sein, dass die Beleuchtungsvorrichtung eine Vorrichtung zur Erzeugung einer Helligkeitsverteilung des ersten Lichtstrahls umfasst. Von Vorteil ist hierbei, dass mittels einer Lichtquelle zur Erzeugung einer Helligkeitsverteilung ein bestimmtes Muster auf die Oberfläche des Blechteiles projiziert werden kann, welches Muster im optischen Erfassungsmittel ausgewertet werden kann und zur Bestimmung des aktuellen Biegewinkels herangezogen werden kann.

Ferner kann es zweckmäßig sein, dass in der Beleuchtungsvorrichtung ein Kollimator oder ein Parabolspiegel zum Erzeugen eines parallelen Strahlenverlaufs des ersten Lichtstrahls ausgebildet ist. Von Vorteil ist hierbei, dass dadurch in der Beleuchtungsvorrichtung ein gerichteter Lichtstrahl erzeugt werden kann, welcher auf die Oberfläche des Blechteiles abgegeben werden kann. Dadurch kann eine Triangulation durchgeführt werden, wobei es hierdurch möglich ist, den Abstand von der Oberfläche des Blechteiles auf die Mittelachse des rotationssymmetrischen Körpers zu berechnen.

Darüber hinaus kann vorgesehen sein, dass das optische Erfassungsmittel einen zweidimensionalen Bildsensor umfasst. Von Vorteil ist hierbei, dass dadurch der vom optischen Erfassungsmittel erfasste dritte Lichtstrahl unverzerrt bildlich dargestellt werden kann, wodurch die Auswertung des erzeugten Bildes, und dadurch die Bestimmung des aktuellen Biegewinkels erleichtert wird.

Gemäß einer besonderen Ausprägung ist es möglich, dass der rotationssymmetrische Körper als Kugel ausgebildet ist. Von Vorteil ist hierbei, dass bei einer Kugel die Mittelachse beliebig gewählt werden kann, beziehungsweise dass eine Kugel unendlich viele und beliebig angeordnete Mittelachsen aufweist, welche durch den Mittelpunkt der Kugel verlaufen. Somit ist es nicht notwendig, dass die Kugel speziell ausgerichtet in der Biegewinkelmessvorrichtung aufgenommen ist. Dadurch kann ein möglicher Messfehler durch falsche Ausrichtung des rotationssymmetrischen Körpers vermieden werden.

Entsprechend einer vorteilhaften Weiterbildung kann vorgesehen sein, dass die Beleuchtungsvorrichtung, der rotationssymmetrische Körper und das optische Erfassungsmittel zumindest teilweise von einer Einhausung umgeben sind, wobei in einem Bereich des rotationssymmetrischen Körpers eine Ausnehmung in der Einhausung vorgesehen ist. Von Vorteil ist hierbei, dass durch die Einhausung ein unerwünschtes Eintreten von Licht in das Messsystem weitestgehend vermieden wird. Somit können die vom optischen Erfassungsmittel erfassten Lichtintensitäten möglichst gut dargestellt werden, um eine automatisierte Auswertung des Messergebnisses zu ermöglichen. Weiters ist vorteilhaft, dass die Einhausung im Bereich des rotationssymmetrischen Körpers eine Ausnehmung aufweist, wodurch der Lichtstrahl vom rotationssymmetrischen Körper auf die Oberfläche des Blechteiles und wieder zurück geleitet werden kann.

Ferner kann es zweckmäßig sein, dass zwischen der Beleuchtungsvorrichtung und dem rotationssymmetrischen Körper eine Filterscheibe angeordnet ist, welche lichtdurchlässige Bereiche und lichtundurchlässige Bereiche aufweist. Durch die Filterscheibe können verschiedene Muster auf das Blech projiziert werden, wobei anhand der Form der auf das Blech projizierten Muster ein Biegewinkel abgelesen werden kann.

In einer Weiterbildung kann vorgesehen sein, dass die lichtdurchlässigen Bereiche und die lichtundurchlässigen Bereiche der Filterscheibe in Form von konzentrischen Kreisen ausgebildet sind. Durch die Ausgestaltung der lichtdurchlässigen Bereiche und der lichtundurchlässigen Bereiche in Form von konzentrischen Kreisen können Schattenringe erzeugt werden, welche auf der Blechoberfläche in Form von Hyperbeln sichtbar sind.

Weiters kann vorgesehen sein, dass die einzelnen lichtdurchlässigen Bereiche, insbesondere Ringe, unterschiedlich eingefärbt sind, sodass auf der Blechoberfläche ein bestimmtes Farbmuster entsteht. Dies kann zu einer vereinfachten Auswertung des Biegewinkels beitragen.

Ferner kann vorgesehen sein, dass eine Scheibenblende ausgebildet ist, welche zwischen Beleuchtungsvorrichtung und optischem Erfassungsmittel angeordnet ist und Blendenöffnungen aufweist, welche am Außenumfang der Scheibenblende angeordnet sind und sich über ein Winkelsegment erstrecken, wobei eine Rotationsachse der Scheibenblende im Wesentlichen koaxial mit der Mittelachse des rotationssymmetrischen Körpers liegt. Eine derartige Scheibenblende weist den Vorteil auf, dass bei dem Messverfahren zum Messen einer gerichtet reflektierenden Oberfläche jene Anteile des Lichtes blockiert werden können, welche keine Aussage über den Biegewinkel zulassen.

Darüber hinaus kann vorgesehen sein, dass über den vollen Umfangswinkel verteilt mehrere Blendenöffnungen ausgebildet sind, wobei die Segmentierung der Blendenöffnungen an die Auflösegenauigkeit des optischen Erfassungsmittels angepasst ist. Hierbei ist von Vorteil, dass die Blende starr und unbeweglich ausgebildet sein kann und dass die Blende an die Erfordernisse des Erfassungsmittels angepasst ist.

Weiters ist es möglich, dass eine Streifenblende ausgebildet ist, welche direkt vor dem optischen Erfassungsmittel angeordnet ist und eine zentrale Blendenöffnung aufweist. Durch die zentrale Blendenöffnung können jene Lichtstrahlen, welche nicht für die Bestimmung des Biegewinkels maßgeblich sind gefiltert werden.

Weiters ist gemäß Anspruch 18 erfindungsgemäß ein Verfahren zur Bestimmung des Biegewinkels eines Blechteils, insbesondere unter Verwendung einer Biegewinkelmessvorrichtung nach einem der Ansprüche 1 bis 16 vorgesehen, wobei das Blechteil durch eine Biegemaschine verformt wird, wodurch sich am Blechteil eine Biegekante zwischen einem ersten und einem zweiten Schenkel bildet, wobei die Biegewinkelmessvorrichtung eine Beleuchtungsvorrichtung mit zumindest einer Lichtquelle, ein optisches Erfassungsmittel mit einer Lichterfassungsfläche und einen rotationssymmetrischen Körper mit einer Mittelachse und einer spiegelnden Oberfläche aufweist, wobei die Mittelachse des rotationssymmetrischen Körpers parallel zur Biegekante ausgerichtet angeordnet ist, wobei die Bestimmung der winkeligen Lage der beiden Schenkel zueinander zumindest folgende Schritte umfasst:

- abgeben eines ersten Lichtstrahles von der Beleuchtungsvorrichtung, welcher erste Lichtstrahl in dessen Pfad an einer Oberfläche des Blechteils reflektiert wird, wodurch ein zweiter Lichtstrahl gebildet wird, welcher an der Oberfläche des rotationssymmetrischen Körpers reflektiert wird, sodass ein dritter Lichtstrahl gebildet wird, welcher parallel zur Mittelachse des rotationssymmetrischen Körpers und somit parallel zur Biegekante ausgerichtet ist und wahlweise direkt oder über weitere Ablenkung auf die Lichterfassungsfläche des optischen Erfassungsmittels gelenkt wird;
- erfassen des dritten Lichtstrahles durch das optische Erfassungsmittel;
- auswerten des vom optischen Erfassungsmittel erfassten dritten Lichtstrahles und daraus berechnen der aktuellen Winkellage des ersten und/oder des zweiten Schenkels des Blechteils. Von Vorteil ist hierbei, dass mittels des Verfahrens der Biegewinkel eines zu biegenden Blechteiles berührungsfrei bestimmt werden kann, wobei die Biegewinkelmessvorrichtung zur Bestimmung des Biegewinkels keine sich bewegenden Teile benötigt. Dadurch kann der Wartungsaufwand für den Betrieb der Biegewinkelmessvorrichtung minimiert werden. Weiters weist die Biegewinkelmessvorrichtung dadurch eine erhöhte Lebensdauer, beziehungsweise eine verminderte Fehleranfälligkeit auf, da durch die Vermeidung der sich bewegenden Teile ein mechanischer Verschleiß, sowie das Erfordernis nach Aktoren vermieden wird. Besonders unter Einsatz eines rotationssymmetrischen Körpers mit einer spiegelnden Oberfläche kann das vom Blechteil reflektierte Licht gut auf das optische Erfassungsmittel projiziert werden, um die aktuelle Winkellage des Blechteiles mit einer hohen Genauigkeit bestimmen zu können.

Insbesondere kann es vorteilhaft sein, dass der erste Lichtstrahl von einer im Wesentlichen punktförmigen Lichtquelle, wie etwa einer LED, erzeugt wird, im Wesentlichen parallel zur Mittelachse des rotationssymmetrischen Körpers ausgerichtet ist und ausgehend von der Beleuchtungsvorrichtung auf den rotationssymmetrischen Körper gestrahlt wird, von wo er reflektiert und auf die Oberfläche des Blechteils geleitet wird. Von Vorteil ist hierbei, dass eine LED einfach angesteuert werden und auf kleinstem Raum das benötigte Licht erzeugen kann.

Weiters kann es zweckmäßig sein, dass der erste Lichtstrahl nach dem Abstrahlen an der Lichtquelle durch einen Kollimator oder durch einen Parabolspiegel zu einem im Wesentlichen parallelen Lichtbündel geformt wird. Von Vorteil ist hierbei, dass dadurch in der Beleuchtungsvorrichtung ein gerichteter Lichtstrahl erzeugt werden kann, welcher auf die Oberfläche des Blechteiles abgegeben werden und von dieser reflektiert und vom optischen Erfassungsmittel erfasst werden kann, ohne dass der Lichtstrahles verzerrt und somit nicht korrekt dargestellt wird. Dadurch kann eine Triangulation durchgeführt werden, wobei es hierdurch möglich ist, den Abstand von der Oberfläche des Blechteiles auf die Mittelachse des rotationssymmetrischen Körpers zu berechnen.

Darüber hinaus kann vorgesehen sein, dass der dritte Lichtstrahl mittels einem im Winkel von 45° zur Mittelachse des rotationssymmetrischen Körpers angeordneten zweiten Spiegel oder Strahlteiler um 90° umgelenkt wird, sodass er auf eine im Winkel von 90° zur Mittelachse des rotationssymmetrischen Körpers angeordnete Lichterfassungsfläche des optischen Erfassungsmittels trifft. Von Vorteil ist hierbei, dass dadurch erreicht werden kann, dass die Biegewinkelmessvorrichtung möglichst platzsparend gebaut werden kann, sodass sie gut in eine Biegemaschine integriert werden kann, ohne dabei den Biegeprozess zu behindern. Weiters kann vorgesehen sein, dass der drittel Lichtstrahl mittels einem in einem anderen Winkel als 45° zur Mittelachse angeordneten zweiten Spiegel oder Strahlteiler umgelenkt wird. Hierbei wird der erste Lichtstrahl im doppelten Winkel der Anordnung des zweiten Spiegels oder des Strahlteiler reflektiert, wobei auch das optische Erfassungsmittel in diesem doppelten Winkel zur Mittelachse angeordnet ist.

Ferner kann vorgesehen sein, dass die Beleuchtungsvorrichtung so ausgerichtet ist, dass der erste Lichtstrahl in einem Winkel von 90° zu der Mittelachse des rotationssymmetrischen Körpers abgegeben wird, wobei der erste Lichtstrahl mittels einem im Winkel von 45° zur Mittelachse des rotationssymmetrischen Körpers angeordneten ersten Spiegel oder Strahlteiler um 90° umgelenkt wird, sodass er im Wesentlichen parallel zur Mittelachse des rotationssymmetrischen Körpers ausgerichtet und auf den rotationssymmetrischen Körper geleitet wird. Von Vorteil ist hierbei, dass dadurch erreicht werden kann, dass die Biegewinkelmessvorrichtung möglichst platzsparend gebaut werden kann, sodass sie gut in eine Biegemaschine integriert werden kann, ohne dabei den Biegeprozess zu behindern. Weiters kann vorgesehen sein, dass der drittel Lichtstrahl mittels einem in einem anderen Winkel als 45° zur Mittelachse angeordneten zweiten Spiegel oder Strahlteiler umgelenkt wird. Hierbei wird der erste Lichtstrahl im doppelten Winkel der Anordnung des zweiten Spiegels oder des Strahlteiler reflektiert, wobei auch das optische Erfassungsmittel in diesem doppelten Winkel zur Mittelachse angeordnet ist.

Weiters kann vorgesehen sein, dass die Lichtstärke des auf das optische Erfassungsmittel einfallenden dritten Lichtstrahles ermittelt wird, wobei der dritte Lichtstrahl auf der Lichterfassungsfläche in Form einer Kreisfläche auftrifft, wobei ein Maximum oder mehrere Maxima der Lichtstärke innerhalb der Kreisfläche ermittelt wird bzw. werden und jeweils durch verbinden des Maximums der Lichtstärke und des Mittelpunktes des Kreises mittels einer Geraden, der aktuelle Biegewinkel des Blechstückes abgeleitet wird, da die Gerade im rechten Winkel zur Oberfläche des Blechteils steht. Von Vorteil ist hierbei, dass mittels dieser Mess- bzw. Berechnungsmethode der aktuelle Biegewinkel des Blechteiles gemessen bzw. berechnet werden kann. Die Gerade, welche zwischen Kreismittelpunkt und Lichtmaximum gezogen wird, steht deswegen normal auf die Blechoberfläche, da jener Strahlengang des Lichtstrahles, welcher im rechten Winkel auf die Blechoberfläche trifft, von dieser auch wieder im rechten Winkel reflektiert wird, und somit an dieser Stelle im Kreis ein Intensitätsmaximum des an der Lichterfassungsfläche des optischen Erfassungsmittels einfallenden Lichtes entsteht. Dieses Verfahren ist besonders gut geeignet um den aktuellen Biegewinkel an einem Blechteil mit einer gut reflektierenden Oberfläche zu bestimmen.

Ferner kann es zweckmäßig sein, dass mittels Triangulation über den radialen Abstand des Maximums der Lichtstärke an der Kreisfläche zum Mittelpunkt und über einen Radius des als Kugel ausgebildeten rotationssymmetrischen Körpers, der Abstand der Oberfläche des Blechteiles zur Mittelachse des rotationssymmetrischen Körpers berechnet wird. Von Vorteil ist hierbei, dass dadurch das Messergebnis des Biegewinkels über die geometrischen Zusammenhänge im Biegewerkzeug geprüft werden kann, wodurch eine Redundanz des Messergebnisses entsteht.

Schließlich kann vorgesehen sein, dass von einer Lichtquelle der Beleuchtungsvorrichtung der erste Lichtstrahl mit einer streifenförmigen Helligkeitsverteilung auf die Oberfläche Blechteiles projiziert wird, wobei der von der Oberfläche reflektierte zweite Lichtstrahl auf den rotationssymmetrischen Körper trifft und von diesem als dritter Lichtstrahl reflektiert wird und auf die Lichterfassungsfläche des optischen Erfassungsmittels geleitet wird, wobei der dritte Lichtstrahl auf der Lichterfassungsfläche in Form einer Kreisfläche auftrifft, an welcher die vom Blechteil reflektierten Streifen in einem Winkelabstand zueinander auf der Kreisfläche projiziert werden, wobei der aktuelle Biegewinkel dadurch berechnet wird, dass der Winkelabstand der einzelnen Streifen an der Kreisfläche ermittelt wird. Eine Vorteilhafte Ausführung des Verfahrens kann dadurch realisiert werden, dass bei einer Streifenprojektion, die Streifen in gleichem Normalabstand zueinander auf die Blechoberfläche projiziert werden. Dies kann unter Zuhilfenahme eines Parabolspiegels oder eines Kollimators realisiert werden. Ist der Normalabstand der Streifen mit unterschiedlicher Lichtstärke an der Oberfläche des Blechwerkstückes gleich groß, so ist in der projizierten Darstellung der Streifen am optischen Erfassungsmittel, jener Bereich der Kreisfläche im rechten Winkel auf die Blechoberfläche ausgerichtet in welchem die Streifen am Kreisumfang einen maximalen Abstand voneinander aufweisen. Der hierbei zugrunde liegende physikalische Effekt wird in der Figurenbeschreibung noch näher erläutert.

Darüber hinaus kann vorgesehen sein, dass der erste Lichtstrahl von der Beleuchtungsvorrichtung auf eine Filterscheibe abgegeben wird, welche Filterscheibe lichtdurchlässige Bereiche und lichtundurchlässige Bereiche aufweist, welche insbesondere in Form von konzentrischen Kreisen ausgebildet sind, wodurch Ringe mit einer Helligkeitsverteilung auf den rotationssymmetrischen Körper und von dort auf die Oberfläche des Blechteils projiziert werden, wobei die Helligkeitsverteilung an der Oberfläche des Blechteils in Form von Hyperbeln sichtbar werden, wobei ein Scheitelpunkt einer Hyperbel den rechten Winkel der Blechoberfläche auf die Mittelachse des rotationssymmetrischen Körpers markiert und diese Scheitelpunkte der Hyperbeln im optischen Erfassungsmittel als Maxima sichtbar werden. Von Vorteil ist hierbei, dass durch dieses Verfahren besonders bei Blechen mit diffusen Blechoberflächen der Biegewinkel erfasst werden kann.

In einer Alternativvariante kann auch vorgesehen sein, dass die Helligkeitsverteilung dadurch erzeugt wird, dass an der spiegelnden Oberfläche des rotationssymmetrischen Körpers nicht spiegelnde Bereiche oder Elemente, wie etwa Abklebungen, Aufdrucke, Ätzungen oder dergleichen vorhanden sind. welche das einfallende Licht nicht oder nur vermindert reflektieren. Derartige nicht spiegelnde Bereiche können beispielsweise in Form von zur Mittelachse konzentrisch angeordneten Ringen ausgebildet sein.

Weiters kann es zweckmäßig sein, dass im Bereich der Filterschiebe eine Optik ausgebildet ist, welche die Lichtstrahlen kollimiert oder speziell formt, sodass sie eine Helligkeitsverteilung in einem vorgegebenen Muster auf der Blechoberfläche erzeugen. Über dieses Muster kann anschließend der Biegewinkel ausgewertet werden.

Zum besseren Verständnis der Erfindung wird diese anhand der nachfolgenden Figuren näher erläutert.

Es zeigen jeweils in stark vereinfachter, schematischer Darstellung:

Fig. 1       eine Seitenansicht eines Aufbaues einer Bearbeitungsanlage;

Fig. 2       eine perspektivische Ansicht einer ersten Ausführungsvariante der Biegewinkelmessvorrichtung;

Fig. 3       eine Vorderansicht der Biegewinkelmessvorrichtung;

Fig. 4       eine Schnittdarstellung der Biegewinkelmessvorrichtung;

Fig. 5       eine Darstellung des Anzeigeergebnisses am Bildsensor;

Fig. 6       eine Schnittdarstellung einer weiteren Ausführungsvariante der Biegewinkelmessvorrichtung mit parallel gerichteten ersten Lichtstrahlen;

Fig. 7       eine Darstellung des Anzeigeergebnisses am Bildsensor unter Verwendung von drei rotationssymmetrischen Körpern;

Fig. 8       eine Schnittdarstellung der Biegewinkelmessvorrichtung mit Beleuchtungsvorrichtung und optischem Erfassungsmittel an derselben Seite;

Fig. 9       eine Schnittdarstellung der Biegewinkelmessvorrichtung mit Spiegel;

Fig. 10      eine Schnittdarstellung der Biegewinkelmessvorrichtung mit Strahlteiler;

Fig. 11      eine Schnittdarstellung der Biegewinkelmessvorrichtung mit Strahlteiler und anders angeordneter Beleuchtungsvorrichtung;

Fig. 12      eine Schnittdarstellung der Biegewinkelmessvorrichtung mit einem Spiegel im Bereich der Beleuchtungsvorrichtung;

Fig. 13      eine Schnittdarstellung der Biegewinkelmessvorrichtung mit einem Spiegel im Bereich des optischen Erfassungsmittels;

Fig. 14      eine Schnittdarstellung der Biegewinkelmessvorrichtung mit zwei Spiegel im Bereich des optischen Erfassungsmittels;

Fig. 15      eine perspektivische Ansicht einer weiteren Ausführungsvariante der Biegewinkelmessvorrichtung mit Streifenprojektor;

Fig. 16      eine Vorderansicht der Biegewinkelmessvorrichtung mit Streifenprojektor;

Fig. 17      eine Schnittdarstellung der Biegewinkelmessvorrichtung mit Streifenprojektor;

Fig. 18      eine perspektivische Ansicht einer weiteren Ausführungsvariante der Biegewinkelmessvorrichtung, welche in einen Biegestempel integriert ist;

Fig. 19    eine Darstellung des Anzeigeergebnisses am Bildsensor einer Ausführungsvariante mit Streifenprojektor;

Fig. 20    eine Abwicklung der Streifen nach Fig. 19;

Fig. 21    eine perspektivische Ansicht einer Ausführungsvariante mit Lichtwellenleiter zur Leitung des dritten Lichtstrahles;

Fig. 22    ein weiteres Ausführungsbeispiel einer Biegewinkelmessvorrichtung mit Filterscheibe in einer Schnittdarstellung;

Fig. 23    eine Darstellung der Projektion an der Blechoberfläche einer Ausführungsvariante mit Filterscheibe;

Fig. 24    eine Darstellung des Anzeigeergebnisses am Bildsensor einer Ausführungsvariante mit Filterscheibe;

Fig. 25    eine Abwicklung der Ansicht nach Fig. 24;

Fig. 26    eine Querschnittdarstellung einer weiteren Ausführungsvariante der Biegewinkelmessvorrichtung mit Blendenscheibe und zwei rotationssymmetrische Körper;

Fig. 27    eine Seitenansicht der weiteren Ausführungsvariante der Biegewinkelmessvorrichtung mit Blendenscheibe und zwei rotationssymmetrische Körpern;

Fig. 28    eine Querschnittdarstellung einer weiteren Ausführungsvariante der Biegewinkelmessvorrichtung mit Blendenscheibe und einem rotationssymmetrischen Körper;

Fig. 29    eine Querschnittdarstellung einer weiteren Ausführungsvariante der Biegewinkelmessvorrichtung mit Streifenblende und zwei rotationssymmetrischen Körpern;

Fig. 30    eine Seitenansicht der weiteren Ausführungsvariante der Biegewinkelmessvorrichtung mit Streifenblende und zwei rotationssymmetrischen Körpern.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

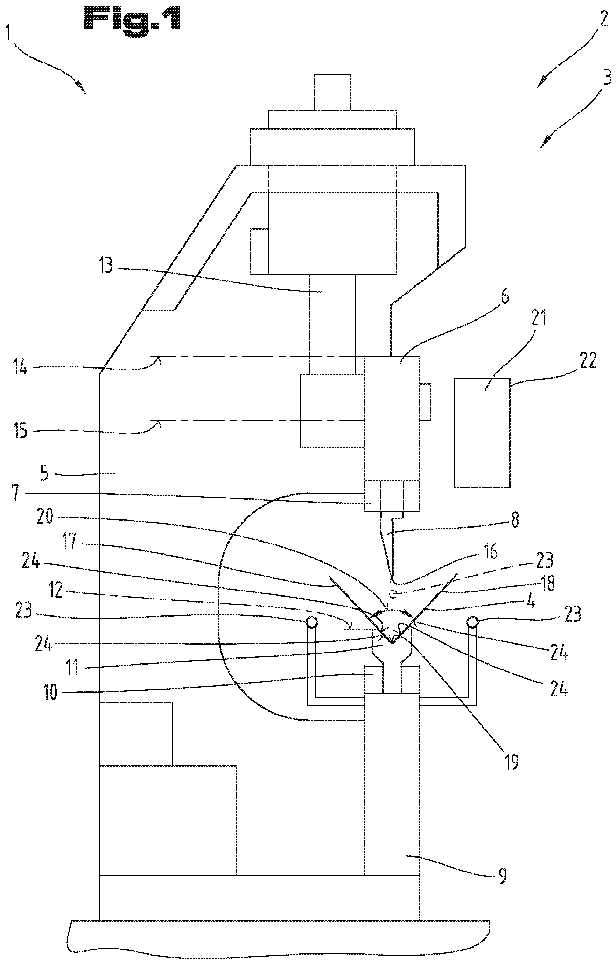

Fig. 1 zeigt in schematischer Darstellung die Seitenansicht einer Bearbeitungsanlage 1. Die Bearbeitungsanlage 1 umfasst eine Biegemaschine 2, wie etwa eine Abkantpresse 3, welche zum Biegen eines Blechteiles 4 vorgesehen ist.

Die Abkantpresse 3 umfasst an einem Maschinengestell 5 angeordnet, einen oberen verstellbaren Pressbalken 6, in welchem eine erste Werkzeugaufnahme 7 zur Aufnahme eines Biegestempels 8, ausgebildet ist. Weiters umfasst die Abkantpresse 3 einen unteren feststehenden Pressbalken 9 an welchem eine zweite Werkzeugaufnahme 10 zur Aufnahme eines Biegegesenkes 11 ausgebildet ist, welches beim Biegevorgang mit dem Biegestempel 8 korrespondiert.

Das zu biegende Blechteil 4 wird zum Biegen auf eine Blechauflagefläche 12 des zweiten Biegegesenkes 11 aufgelegt. Der Biegestempel 8 respektive der obere verstellbare Pressbalken 6 wird durch eine Pressenantriebseinheit 13 in vertikaler Richtung nach oben bzw. nach unten bewegt, wobei der obere Pressbalken 6, sowie der darin aufgenommene Biegestempel 8 zwischen einer oberen Endposition 14 und einer unteren Endposition 15 verstellt werden. Durch diese Verstellbewegung kann das zwischen Biegestempel 8 und Biegegesenk 11 platzierte Blechteil 4 verformt werden, wobei der Biegestempel 8 das Blechteil 4 in das Biegegesenk 11 eindrückt. Insbesondere wird eine Arbeitskante 16 des Biegestempels 8 auf das Blechteil 4 gedrückt, sodass sich das Blechteil 4 verbiegt und im Blechteil 4 ein erster Schenkel 17 und ein zweiter Schenkel 18 geformt wird, wobei sich während des Biegevorganges zwischen den beiden Schenkel 17, 18 eine Biegekante 19 ausbildet. Die Biegekante 19 liegt während des Biegevorganges, insbesondere solange der Biegestempel 8 auf das Blechteil 4 drückt, deckungsgleich zu der Arbeitskante 16 des Biegestempels 8. Durch den Biegevorgang werden die beiden Schenkel 17, 18 in einem Biegewinkel 20 zueinander gebogen.

Weiters kann vorgesehen sein, das zur Steuerung der Pressenantriebseinheit 13 ist eine Rechnereinheit 21 ausgebildet ist, welche an eine Eingabe- und/oder Anzeigeeinheit 22 gekoppelt sein kann.

Wie aus Fig. 1 weiters ersichtlich, ist eine Biegewinkelmessvorrichtung 23 vorgesehen, welche zur berührungslosen Messung des aktuellen Biegewinkels 20 ausgebildet ist. Die Messung des Biegewinkels 20 erfolgt hierbei durch eine optische Erfassung der Oberfläche 24 des Blechteiles 4. Es gibt mehrere Möglichkeiten wo die Oberfläche 24 des Blechteils 4 erfasst werden kann, um den Biegewinkel 20 zu bestimmen. Dementsprechend gibt es auch mehrere verschiedene Möglichkeiten wo die Biegewinkelmessvorrichtung 23 an der Biegemaschine 2 angeordnet werden kann. Beispielsweise ist es denkbar, dass, wie in Fig. 1 dargestellt, die Biegewinkelmessvorrichtung 23 am Maschinengestell 5 angeordnet ist, wobei zwei Biegewinkelmessvorrichtungen 23 vorgesehen sind, welche die Oberfläche 24 des ersten Schenkels 17 bzw. des zweiten Schenkels 18 des Blechteiles 4 erfassen. Von Vorteil ist hierbei, dass die beiden Biegewinkelmessvorrichtungen 23 einfach am Maschinengestell 5 befestigt werden können und den Biegevorgang nicht negativ beeinflussen. Der Biegewinkel 20 wird hierbei aus der gemessenen Lage des ersten Schenkels 17 bzw. des zweiten Schenkels 18 berechnet.

In einer weiteren Variante kann vorgesehen sein, dass nur eine Biegewinkelmessvorrichtung 23 ausgebildet ist, welche in den Biegestempel 8 integriert ist oder im Bereich des Biegestempels 8 angeordnet ist und welche sowohl die Lage des ersten Schenkels 17 als auch die Lage des zweiten Schenkels 18 des Blechteiles 4 gleichzeitig erfassen kann, wodurch der Biegewinkel 20 berechnet werden kann.

Dadurch dass die in weiterer Folge noch genauer beschriebene Biegewinkelmessvorrichtung 23 an verschiedensten Positionen im Bereich des Blechteils 4 positioniert werden kann, ist es auch denkbar, dass die Biegewinkelmessvorrichtung 23 für verschiedene Arten von Biegemaschinen 2 eingesetzt wird. Beispielsweise ist der Einsatz der Biegewinkelmessvorrichtung 23 in einer Schwenkbiegemaschine denkbar. Hierbei kann die Biegewinkelmessvorrichtung 23 im Bereich des nach oben schwenkenden Biegeschenkels eingesetzt werden, um den Biegewinkel zu bestimmen.

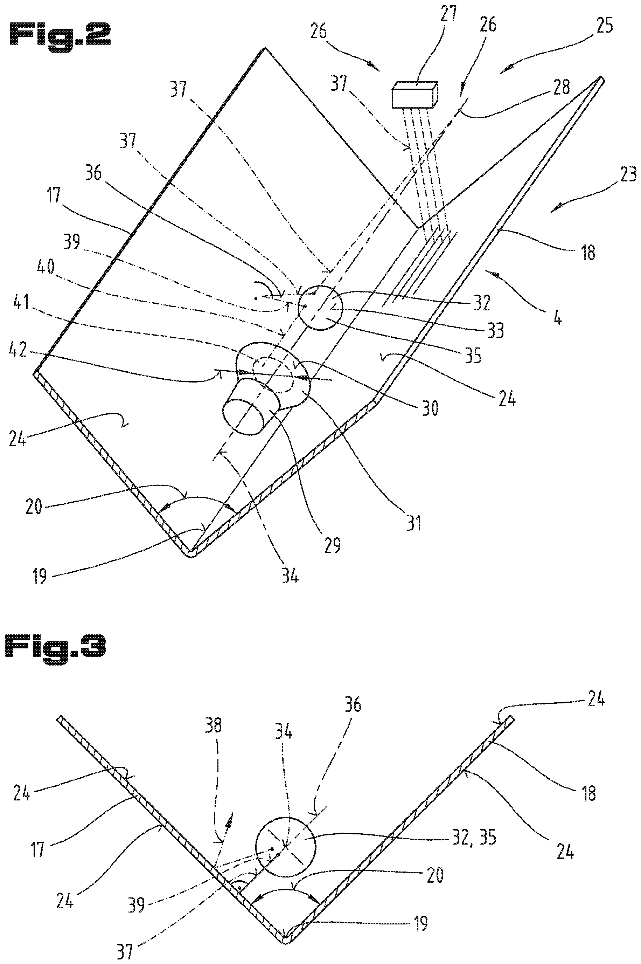

Fig. 2 zeigt in schematischer Darstellung eine perspektivische Ansicht einer ersten Ausführungsvariante der Biegewinkelmessvorrichtung 23, wobei diese zwischen zwei einander zugerichteten Schenkeln 17, 18 des Blechteiles 4 angeordnet ist, um den Biegewinkel 20 zu bestimmen. Wie aus Fig. 2 ersichtlich, umfasst die Biegewinkelmessvorrichtung 23 eine Beleuchtungsvorrichtung 25, welche zumindest eine Lichtquelle 26 aufweist. Die Lichtquelle 26 kann beispielsweise als Vorrichtung 27 zur Erzeugung einer Helligkeitsverteilung, wie etwa als Streifenprojektor, ausgebildet sein. Weiters ist es auch denkbar, dass die Lichtquelle 26 in Form einer punktförmigen Lichtquelle 28, wie etwa einer LED, ausgebildet ist. Genaue Ausführungsbeispiele beziehungsweise Anwendungen zu den verschiedenen Lichtquellen 26 werden in weiterer Folge noch gegeben.

Weiters umfasst die Biegewinkelmessvorrichtung ein optisches Erfassungsmittel 29, welches eine Lichterfassungsfläche 30 aufweist. Die Lichterfassungsfläche 30 ist vorzugsweise durch einen zweidimensionalen Bildsensor 31, wie etwa einem CCD Sensor (charge-coupled device) ausgebildet.

Weiters umfasst die Biegewinkelmessvorrichtung 23 einen rotationssymmetrischen Körper 32, welcher eine spiegelnde Oberfläche 33 aufweist. Im Idealfall ist die Rauhigkeit der Oberfläche 33 des rotationssymmetrischen Körpers 32 hierbei so gewählt bzw. ausgeführt, dass sie gegenüber der Wellenlänge des von der Lichtquelle 26 erzeugten Lichtes vergleichsweise kleine Rauhigkeitsstrukturen aufweist, das heißt möglichst glatt ist, wodurch es zu einer gerichteten Reflexion eines auf die Oberfläche 33 einfallenden Lichtstrahles kommt und somit das Reflexionsgesetzt anzuwenden ist. Mit anderen Worten ausgedrückt, ist der Einfallswinkel eines an der Oberfläche 33 des rotationssymmetrischen Körpers 32 einfallenden Lichtstrahles gleich groß dem Ausfallswinkel eines an der Oberfläche reflektierten Lichtstrahles. Ein derartiger rotationssymmetrischen Körper 32 mit einer spiegelnden Oberfläche 33 kann beispielsweise aus einem metallischen Werkstoff wie etwa Edelstahl hergestellt werden. Da am rotationssymmetrischen Körper 32 keine mechanischen Belastungen auftreten ist die Auswahl eines geeigneten Materials nur auf die beschriebenen optischen Eigenschaften, sowie eine entsprechende Altersbeständigkeit der Oberfläche 33 beschränkt.

Der rotationssymmetrische Körper 32 weist eine Mittelachse 34 auf, welche auch als Symmetrieachse bezeichnet werden kann und um welche die Oberfläche 33 rotationssymmetrisch angeordnet ist. Um mittels der erfindungsgemäßen Biegewinkelmessvorrichtung 23 den aktuellen Biegewinkel 20 bestimmen zu können, ist es notwendig, dass die Biegewinkelmessvorrichtung 23 in deren Lage relativ zum zu messenden Blechteil 4 so ausgerichtet ist, dass die Mittelachse 34 des rotationssymmetrischen Körpers 32 parallel zur Biegekante 19 des zu messenden Blechteiles 4 liegt. Dies wird dadurch erreicht, dass die Biegewinkelmessvorrichtung 23 relativ zum Biegestempel 8 positioniert bzw. ausgerichtet wird, wobei insbesondere darauf geachtet wird, dass die Mittelachse 34 des rotationssymmetrischen Körpers 32 parallel zur Arbeitskante 16 des Biegestempels 8 liegt.

Wie aus Fig. 2 ersichtlich, kann vorgesehen sein, dass der rotationssymmetrische Körper 32 in Form einer Kugel 35 ausgebildet ist. Dies hat den Vorteil, dass jede beliebig liegende bzw. gewählte Achse, welche durch den Mittelpunkt der Kugel 35 verläuft, die Mittelachse 34 darstellen kann. Somit wird eine richtige Positionierung des rotationssymmetrischen Körpers 32, welcher in Form einer Kugel 35 ausgebildet ist, erleichtert. Alternativ dazu ist es auch möglich, dass verschiedenste andere Körperformen, wie etwa Kegel als rotationssymmetrische Körper 32 ausgebildet sind.

Die Funktionsweise bzw. die physikalischen Effekte der Biegewinkelmessvorrichtung 23 wird untenstehend in einer Zusammenschau der Fig. 2 bis Fig. 4 näher erläutert. Hierbei wird angenommen, dass die Oberfläche 24 des Blechteils 4 ebenfalls spiegelnde Eigenschaften aufweist, sodass das Reflexionsgesetzt anzuwenden ist.

In den Figuren 2 bis 4 ist eine weitere und gegebenenfalls für sich eigenständige Ausführungsform der Biegewinkelmessvorrichtung 23 gezeigt, wobei für gleiche Teile gleiche Bezugszeichen bzw. Bauteilbezeichnungen wie in den jeweils vorangegangenen Figuren verwendet werden. Um unnötige Wiederholungen zu vermeiden, wird auf die detaillierte Beschreibung in den jeweils vorangegangenen Figuren hingewiesen bzw. Bezug genommen.

Fig. 3 zeigt eine Vorderansicht des schematisch dargestellten Aufbaus nach Fig. 2, wobei hier als Ansichtsebene eine normal auf die Biegekante 19 bzw. die Mittelachse 34 stehende Ebene gewählt wurde.

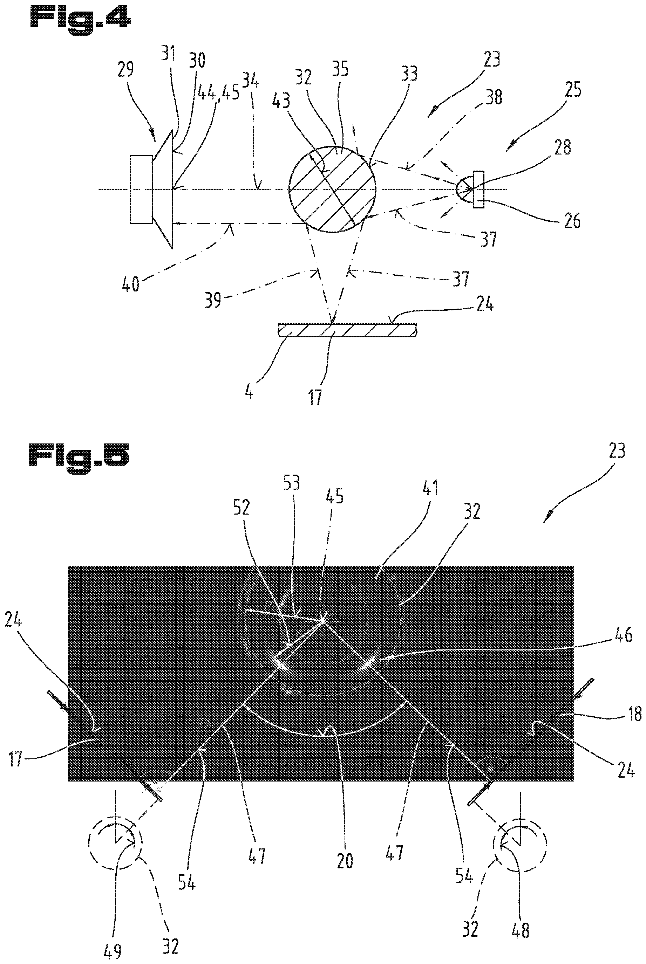

Fig. 4 zeigt eine Schnittdarstellung der Biegewinkelmessvorrichtung 23, wobei als Schnittebene bzw. Ansichtsebene eine Ebene ε 36 gewählt wurde, auf welcher die Mittelachse 34 angeordnet ist, und welche zusätzlich im rechten Winkel zur Oberfläche 24 des Blechteiles 4, insbesondere des zweiten Schenkels 17 angeordnet ist. Die Lage der Ansichtsebene wird so gewählt um die Funktion der Biegewinkelmessvorrichtung 23 beschreiben zu können.

In weiterer Folge wird in diesem Dokument zur Erklärung der Funktionsweise der Biegewinkelmessvorrichtung 23 von Lichtstrahlen gesprochen. Hiermit sei erwähnt, dass beim Gebrauch des Wortes Lichtstrahl jener Strahlengang eines Lichtstrahles gemeint und dargestellt ist, welcher als für die Funktionalität der Biegewinkelmessvorrichtung 23 relevanter Strahlengang in den jeweiligen Figuren dargestellt ist, und anhand welchem diese erklärt werden. Zur Vereinfachung bzw. zur Veranschaulichung wird immer nur dieser Strahlengang des Lichtstrahles dargestellt bzw. beschrieben, welcher aufgrund der physikalischen Gesetzmäßigkeiten des Lichtes zum bestimmen des Biegewinkels 20 herangezogen wird.

Wie aus Fig. 2 bis 4 ersichtlich, kann vorgesehen sein, dass die punktförmige Lichtquelle 28 auf der Mittelachse 34 liegend angeordnet ist. Weiters kann vorgesehen sein, dass das optische Erfassungsmittel 29 ebenfalls auf der Mittelachse 34 liegend angeordnet ist, wobei die Lichterfassungsfläche 30 normal auf die Mittelachse stehend angeordnet ist.

Wie aus den Fig. 2 bis 4 weiters ersichtlich, wird in diesem ersten Ausführungsbeispiel der Biegewinkelmessvorrichtung 23 von der Lichtquelle 26, insbesondere von der punktförmigen Lichtquelle 28 ein erster Lichtstrahl 37 abgestrahlt. Hierbei kann, wie in diesem Ausführungsbeispiel dargestellt, vorgesehen sein, dass der erste Lichtstrahl 37 auf die Oberfläche 33 des rotationssymmetrischen Körpers 32 gerichtet ist und an dieser reflektiert wird. Die von der punktförmigen Lichtquelle 28 ausgehenden ersten Lichtstrahlen 37 werden von der Oberfläche 33 des rotationssymmetrischen Körpers 32 entsprechend dem Reflexionsgesetz in alle Raumrichtungen reflektiert, wobei, wie bereits erläutert, nur jener Strahlengang des Lichtstrahles 37 dargestellt ist, welcher zur Messung des Biegewinkels relevant ist.

Dies ist jener Strahlengang welcher in der Ansicht nach Fig. 3 betrachtet, vom rotationssymmetrischen Körper 32 im rechten Winkel auf die Oberfläche 24 des Blechteiles 4 gestrahlt wird, da dieser Strahlengang des ersten Lichtstrahles 37 in weiterer Folge auf die Lichterfassungsfläche 30 des optischen Erfassungsmittels 29 trifft und somit vom Bildsensor 31 ausgewertet werden kann.

In den Fig. 3 und 4 ist zur Veranschaulichung weiters ein nicht relevanter Strahlengang 38 dargestellt, welcher am rotationssymmetrischen Körper 32 bzw. an der Oberfläche 24 des Blechteiles 4 in einem solchen Winkel auftrifft, dass er dermaßen reflektiert wird, sodass er nicht von der Lichterfassungsfläche 30 des optischen Erfassungsmittels 29 erfasst werden kann.

Der relevante und dargestellte Strahlengang des ersten Lichtstrahles 37, welcher auf die Oberfläche 24 des Blechteiles 4 abgegeben wird, wird nach dem Reflexionsgesetz von der Oberfläche 24 reflektiert und als zweiter Lichtstrahl 39 zum rotationssymmetrischen Körper 32 zurückgestrahlt. Der zweite Lichtstrahl 39 wird nun abermals von der Oberfläche 33 des rotationssymmetrischen Körpers 32 reflektiert und als dritter Lichtstrahl 40 auf die Lichterfassungsfläche 30 gestrahlt. Der dritte Lichtstrahl 40 verläuft hierbei parallel zur Mittelachse 34.

Die Reflexionen, welche vom rotationssymmetrischen Körper 32 als dritter Lichtstrahl 40 auf die Lichterfassungsfläche 30 geworfen werden, bilden an der Lichterfassungsfläche 30, insbesondere an einer Kreisfläche 41 auf der Lichterfassungsfläche 30, eine unterschiedliche Helligkeitsverteilung bzw. Lichtintensität. Ein Durchmesser 42 der Kreisfläche 41 an welcher die relevanten Lichtstrahlen 40 einfallen können, ist hierbei gleich groß wie ein Durchmesser 43 des rotationssymmetrischen Körpers 32.

Wie bereits erwähnt, kann vorgesehen sein, dass, wie aus den Fig. 2 bis 4 ersichtlich, ein Zentrum 44 der Lichterfassungsfläche 30 auf der Mittelachse 34 liegt und die Lichterfassungsfläche 30 normalstehend auf die Mittelachse 34 angeordnet ist. Dadurch kann erreicht werden, dass einerseits ein Mittelpunkt 45 der Kreisfläche 41 konzentrisch mit dem Zentrum 44 der Lichterfassungsfläche 30 liegt und die auf die Lichterfassungsfläche 30 einfallenden Lichtstrahlen verzerrungsfrei dargestellt werden. Wie aus der Zusammenschau der Fig. 2 bis 4 ersichtlich, ist jener Strahlengang, welcher entlang der Ebene ε 36 von der Oberfläche 24 des Blechteiles 4 reflektiert wird, auch jener Strahlengang, welcher an der Lichterfassungsfläche 30 den aktuellen Biegewinkel 20 repräsentiert, da er an der Lichterfassungsfläche 30 ein Intensitätsmaximum der Lichtstärke erzeugt.

In der Fig. 5 ist eine weitere und gegebenenfalls für sich eigenständige Ausführungsform der Biegewinkelmessvorrichtung 23 gezeigt, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 4 hingewiesen bzw. Bezug genommen.

In Fig. 5 ist eine exemplarische Auswertung des Bildsensors 31 dargestellt und wird nachfolgend genauer erläutert.

Wie aus Fig. 5 ersichtlich, tritt an der Kreisfläche 41 ein oder mehrere Maxima 46 der Lichtstärke der vom Bildsensor 31 aufgefangenen Lichtintensität auf, welches durch den in den Fig. 2 bis 4 dargestellten Strahlengang erzeugt wird.

Aus den bereits beschriebenen physikalischen Zusammenhängen ist bekannt, dass dieser relevante Strahlengang genau jener Strahlengang ist, welcher in der Ansicht nach Fig. 2 und Fig. 3 im rechten Winkel auf das Blechteil 4 reflektiert wird. Somit kann gefolgert werden, dass, wenn man das Maximum 46 der Lichtstärke mittels einer Geraden 47 mit dem Mittelpunkt 45 der Kreisfläche 41 verbindet, auch diese Gerade 47 im rechten Winkel auf das Blechteil 4 respektive deren Schenkel 17, 18 steht. Somit kann der Biegewinkel 20, wie aus Fig. 5 ersichtlich, auch zwischen diesen beiden Geraden 47 abgelesen werden.

Wie aus den Zusammenhängen in Fig. 5 ersichtlich, ist für die richtige Darstellung des Biegewinkels die Lage des rotationssymmetrischen Körpers 32 relativ zu der zu messenden Oberfläche 24 des Blechteiles 4 in der Ebene aus Fig. 3 oder Fig. 5 betrachtet nicht relevant.

Somit ist es auch denkbar, dass, wie in Fig. 5 schematisch angedeutet, der rotationssymmetrische Körper 32 an beliebiger Lage, etwa außenseitig des Blechteils 4 angeordnet sein kann. Bei einer derartigen Ausführung ist es jedoch notwendig, dass zwei rotationssymmetrische Körper 32 bzw. gegebenenfalls zwei Bildsensoren 31 an der Biegemaschine 2 angeordnet sind, wobei ein erster Winkel 48 und ein zweiter Winkel 49 ermittelt werden, welche zusammen den aktuellen Biegewinkel 20 ergeben.

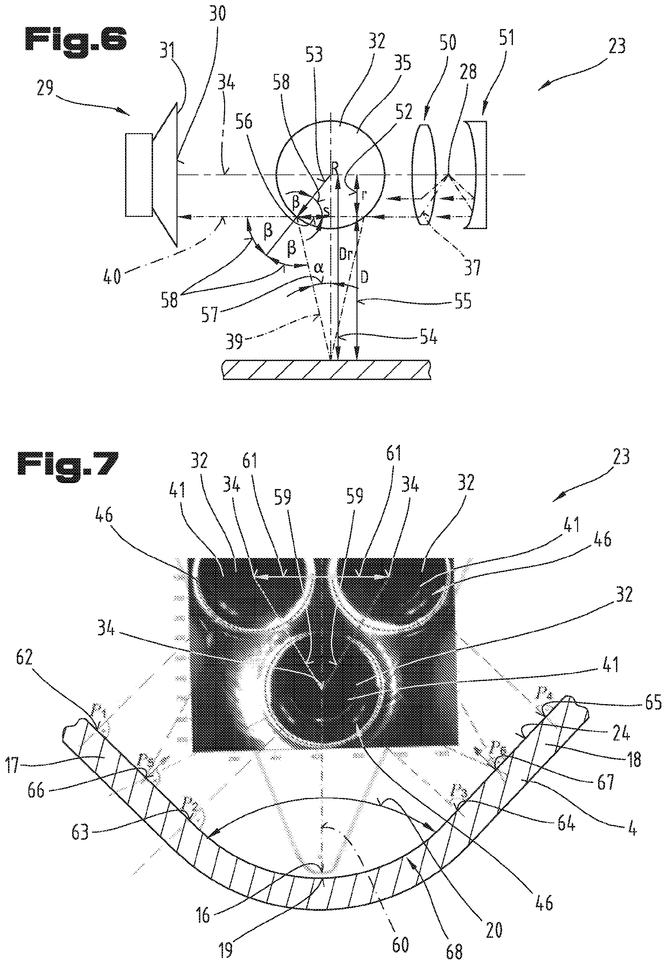

In der Fig. 6 ist eine weitere und gegebenenfalls für sich eigenständige Ausführungsform der Biegewinkelmessvorrichtung 23 gezeigt, wobei wiederum für gleiche Teile gleiche Bezugszeichen bzw. Bauteilbezeichnungen wie in den vorangegangenen Figuren 1 bis 5 verwendet werden. Um unnötige Wiederholungen zu vermeiden, wird auf die detaillierte Beschreibung in den vorangegangenen Figuren 1 bis 5 hingewiesen bzw. Bezug genommen.

Fig. 6 zeigt das weitere Ausführungsbeispiel der Biegewinkelmessvorrichtung 23 entsprechend einer Ansicht nach Fig. 4. Wie aus der Darstellung aus Fig. 6 ersichtlich, kann vorgesehen sein, dass die Beleuchtungsvorrichtung 25 zusätzlich zur punktförmigen Lichtquelle 28 einen Kollimator 50 bzw. einen Parabolspiegel 51 umfasst, durch welche die von der punktförmigen Lichtquelle 28 abgegebenen ersten Lichtstrahlen 37 parallel zueinander ausgerichtet werden und somit parallel zur Mittelachse 34 verlaufen. Der Kollimator 50 bzw. der Parabolspiegel 51 sind als räumliche Gebilde ausgeführt, sodass die ersten Lichtstrahlen 37 nicht nur in der Ebene, sondern im Raum parallel zur Mittelachse 34 verlaufen.

Durch die Anordnung laut Fig. 6 mit parallel zueinander ausgerichteten Lichtstrahlen ist es möglich, dass aus einem in Fig. 5 dargestellten Maximum der Lichtstärke 46 nicht nur die winkelige Lage der Oberfläche 24 des Blechteils 4 und daraus der Biegewinkel 20 berechnet wird, sondern dass mittels des Abstandes (r) 52 des Maximums der Lichtstärke 46 zum Mittelpunkt 45 der Kreisfläche 41 bzw. unter Kenntnis eines Radius (R) 53 der Kugel 35 mittels Triangulation ein Abstand ($D_r$) 54 von der Oberfläche 24 des Blechteils 4 zur Mittelachse 34 berechnet wird. Als Hilfsgrößen für die Berechnung werden der Abstand (D) 55 der Abstand (S) 56 der Winkel ($\alpha$) 57 und der Reflexionswinkel ($\beta$) 58 eingeführt. Die Zusammenhänge hierzu sind aus einer Zusammenschau von Fig. 5 und Fig. 6 ersichtlich.

Der Abstand ($D_r$) 54 berechnet sich hierbei mit folgender Formel:

$$Dr = \frac{\sqrt{R^2 - r}}{\tan\left(2 * \arcsin\left(\frac{r}{R}\right) - \frac{\pi}{2}\right)} + r$$

Der Radius 53 der Kugel 35 beträgt zwischen 0,1 und 50 mm, bevorzugt zwischen 0,2 und 10 mm, insbesondere zwischen 1 und 5 mm.

Wie aus Fig. 5 ersichtlich, können Spiegelungen bzw. Reflexionen dazu führen, dass an der Lichterfassungsfläche 30, insbesondere an der Kreisfläche 41, mehrere Maxima 46 der Lichtstärke auftreten, wobei einige dieser Maxima 46 als unerwünschte Störungen auftreten und somit die Lesbarkeit des tatsächlichen Biegewinkels 20 erschweren. Hierbei kann es notwendig sein, dass ein Bereich bzw. Winkelsegment in welchem ein lokales Maximum der Lichtstärke 46 erwartet wird eingeschränkt wird. Dies kann dadurch realisiert werden, dass aufgrund der Eintauchtiefe des Biegestempels 8 im Biegegesenk 11 und der bekannten Geometrie des Biegestempels 8 und des Biegegesenk 11, sowie der bekannten Blechstärke des Blechteils 4 ein zu erwartender Biegewinkel 20 beziehungsweise ein Bereich von der Rechnereinheit 21 vorberechnet wird.

Der Biegevorgang kann dermaßen ablaufen, dass unter Zuhilfenahme der Biegewinkelmessvorrichtung 23 während des Biegevorganges der Biegewinkel 20 vom optischen Erfassungsmittel 29, insbesondere vom Bildsensor 31, erfasst wird und von der Rechnereinheit 21 ausgewertet wird.

Dieses Ergebnis des gemessenen Biegewinkels 20 kann für einen Soll-Ist-Vergleich des Biegewinkels 20 herangezogen werden, um in der Rechnereinheit 21 mittels eines Regelzyklus die notwendige Überbiegung zu berechnen. Weiters kann auch vorgesehen sein, dass wenn der Biegestempel 8 vom Blechteil 4 nach Beendigung des Biegevorganges abgehoben wird, mittels der Biegewinkelmessvorrichtung 23 eine Endkontrolle des Biegewinkels 20 durchgeführt wird und in einem eventuell notwendigen weiteren Schritt eine Nachbiegung durchgeführt wird.

In einer weiteren Variante ist es auch denkbar, dass die Biegewinkelmessvorrichtung 23 nicht direkt an die Rechnereinheit 21 gekoppelt ist, sondern dass die Biegewinkelmessvorrichtung 23 eine eigene Bildverarbeitungseinheit aufweist, welche beispielsweise mittels einer Netzwerkanbindung an die Rechnereinheit 21 gekoppelt ist.

In der Fig. 7 ist eine weitere und gegebenenfalls für sich eigenständige Ausführungsform der Biegewinkelmessvorrichtung 23 gezeigt, wobei hier eine Ansicht bzw. eine Darstellung nach Fig. 5 gewählt wurde und wobei wiederum für gleiche Teile gleiche Bezugszeichen bzw. Bauteilbezeichnungen wie in den vorangegangenen Figuren 1 bis 6 verwendet werden. Um unnötige Wiederholungen zu vermeiden, wird auf die detaillierte Beschreibung in den vorangegangenen Figuren 1 bis 6 hingewiesen bzw. Bezug genommen.

In der Ausführungsvariante nach Fig. 7 sind an der Biegewinkelmessvorrichtung 23 insgesamt drei rotationssymmetrische Körper 32 installiert, wobei jeder der rotationssymmetrischen Körper 32 von einer eigenen Lichtquelle 26 beleuchtet wird. Weiters kann vorgesehen sein, dass jeder der rotationssymmetrischen Körper 32 von einem eigenen optischen Erfassungsmittel 29 erfasst wird oder aber auch, dass nur ein optisches Erfassungsmittel 29 zur gemeinsamen Erfassung und Auswertung der Lichtstrahlen vorgesehen ist.

In einer Weiterbildung ist es auch denkbar, dass zusätzliche rotationssymmetrische Körper 32 in der Biegewinkelmessvorrichtung 23 angeordnet sind.

In der in Fig. 7 dargestellten Ausführungsvariante sind die drei rotationssymmetrischen Körper 32 innerhalb der beiden Blechschenkel 17, 18 liegend angeordnet, wobei diese in einem vorbekannten Abstand 59 bzw. in vordefinierter Lage zueinander angeordnet sind. Insbesondere kann vorgesehen sein, dass ein erster rotationssymmetrischer Körper 32 mit dessen Mittelachse 34 direkt auf einer Symmetrieebene 60, welche den Biegewinkel 20 halbiert angeordnet ist, und dass die beiden weiteren rotationssymmetrischen Körper 32 mit deren Mittelachse 34 jeweils in einem Abstand 61 von der Symmetrieebene 60 entfernt angeordnet sind.

Durch diese Anordnung können die Punkte P1 62 sowie P2 63 des ersten Schenkels 17 sowie die Punkte P3 64 und P4 65 des zweiten Schenkels 18 über die zuvor beschriebene Methode zur Biegewinkelmessung direkt erfasst werden.

Darüber hinaus ergeben sich an den drei Kreisflächen 41 weitere Intensitätsmaxima 46 der Lichtstärke. Diese kommen jeweils dadurch zustande, dass von einer der außenliegenden rotationssymmetrischen Körper 32 der Lichtstrahl in den Punkten P5 66 bzw. P6 67 an der Oberfläche 24 des Blechteiles 4 nach dem Reflexionsgesetzt reflektiert wird und an der Kreisfläche 41 eines auf der Symmetrieebene 60 liegenden rotationssymmetrischen Körpers 32 ein Maximum der Lichtstärke 46 erzeugt. Umgekehrt wird jeweils das vom auf der Symmetrieebene 60 befindlichen rotationssymmetrischen Körper 32 reflektierte Licht in den Punkten P5 66 und P6 67 nach dem Reflexionsgesetz reflektiert und erzeugt an den beiden im Abstand 61 zur Symmetrieebene 60 angeordneten rotationssymmetrischen Körpern 32 jeweils ein weiteres Maximum der Lichtstärke 46.

Auf Basis der Anordnung nach Fig. 7 lässt sich der gemessene Biegewinkel 20 durch mehrere Messpunkte bestimmen, wodurch eine mögliche Fehleranfälligkeit des Messergebnisses aufgrund von Verunreinigungen bzw. Kratzern usw. der Oberfläche 24 des Blechteils 4 reduziert werden kann. Darüber hinaus kann mittels dieser Anordnung eine Geradheit der beiden Schenkel 17, 18 gemessen werden. Wenn der untere auf der Symmetrieebene 60 platzierte rotationssymmetrische Körper 32 nahe genug an der Biegekante 19 angeordnet ist, ist es auch möglich, dass ein Biegeradius 68 bzw. dessen Form erfasst und gemessen wird.

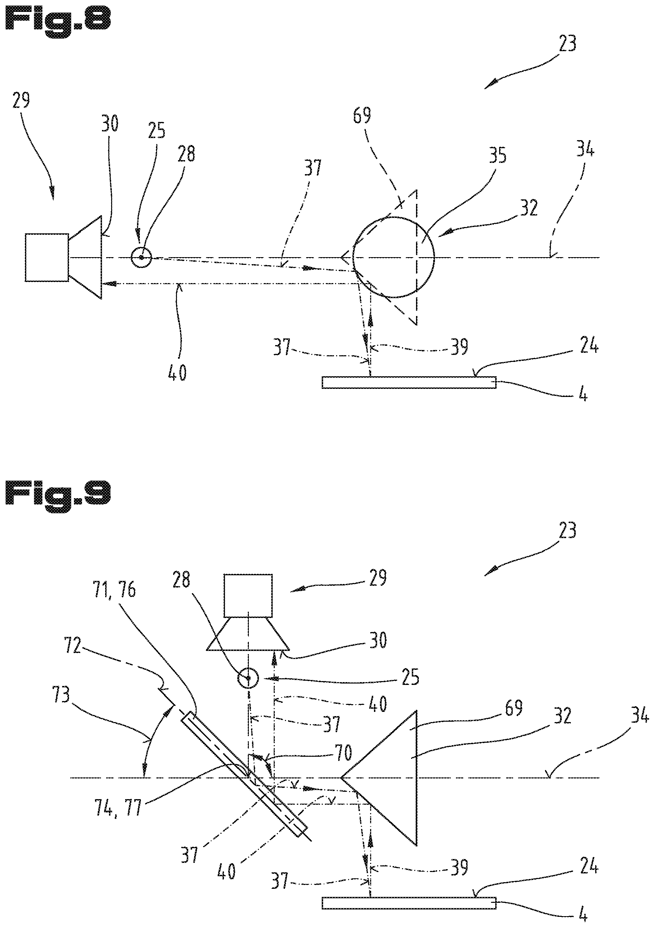

In den Figuren 8 bis 15 sind weitere und gegebenenfalls jeweils für sich eigenständige Ausführungsformen der Biegewinkelmessvorrichtung 23 gezeigt, wobei hier eine Ansicht bzw. eine Darstellung nach Fig. 4 gewählt wurde und wobei wiederum für gleiche Teile gleiche Bezugszeichen bzw. Bauteilbezeichnungen wie in den jeweils vorangegangenen Figuren verwendet werden. Um unnötige Wiederholungen zu vermeiden, wird auf die detaillierte Beschreibung in den jeweils vorangegangenen Figuren hingewiesen bzw. Bezug genommen.

In den Fig. 8 bis 11 sind hierbei Ausführungsvarianten dargestellt, in welchen die Beleuchtungsvorrichtung 25 und das optische Erfassungsmittel 29 in der Ansichtsebene betrachtet an derselben Seite bezüglich einer den rotationssymmetrischen Körper 32 schneidenden von oben nach unten verlaufenden Teilebene angeordnet sind. Der rotationssymmetrische Körper 32 kann hierbei etwa als Kegel 69 ausgebildet sein.

In dem Ausführungsbeispiel nach Fig. 8 sind die punktförmigen Lichtquelle 28 und das optischen Erfassungsmittel 29 beide auf der Mittelachse 34 angeordnet. Hierbei wird der erste Lichtstrahl 37 von der punktförmigen Lichtquelle 28 abgegeben, am rotationssymmetrischen Körper 32 reflektiert und auf die Oberfläche 24 des Blechteils 4 geworfen. Von dort wird er reflektiert und als zweiter Lichtstrahl 39 zurück zum rotationssymmetrischen Körper 32 geworfen, wobei er von diesem abermals reflektiert wird und als dritter Lichtstrahl 40 auf die Lichterfassungsfläche 30 des optischen Erfassungsmittel 29 geworfen wird. Von Vorteil an dieser Anordnung kann sein, dass die platzsparend ausgeführt werden kann.

Fig. 9 zeigt eine weitere mögliche Ausführungsform der Biegewinkelmessvorrichtung 23, wobei in dieser Ausführungsform das optische Erfassungsmittel 29 sowie die Beleuchtungsvorrichtung 25 nicht auf der Mittelachse 34 des rotationssymmetrischen Körpers 32 angeordnet sind, sondern beide in der Ansichtsebene betrachtet in einem Winkel 70 von 90° zur Mittelachse 34 angeordnet sind. Hierbei ist ein erster Spiegel 71 vorgesehen, welcher den Lichtstrahl ablenkt. Insbesondere wird der erste Spiegel 71, wie in Fig. 9 schematisch dargestellt, durch eine Spiegelebene 72 definiert. Die Spiegelebene 72 ist hierbei jene Fläche an welcher einfallendes Licht reflektiert wird. Die Spiegelebene 72 erstreckt sich auch in die Tiefe der Ansichtsebene, um sämtliche vom rotationssymmetrischen Körper 32 abgegebenen Lichtstrahlen reflektieren und auf die Kreisfläche 41 leiten zu können. Vorzugsweise ist vorgesehen, dass die Spiegelebene 72 in der Ansichtsebene betrachtet einem Winkel 73 von 45° zur Mittelachse 34 angeordnet ist. Hierbei ist vorzugsweise vorgesehen, dass das Zentrum 74 des ersten Spiegels 71 genau auf der Mittelachse 34 angeordnet ist. Durch diese Anordnung des ersten Spiegels 71 bzw. seiner Spiegelebene 72 kann erreicht werden, dass sämtliche Lichtstrahlen, welche parallel zur Mittelachse 34 verlaufen um 90° abgelenkt werden und in einem verzerrungsfreien, wenn auch gespiegeltem Bild an der Lichterfassungsfläche 30 dargestellt werden können. Ferner kann vorgesehen sein, dass die Spiegelebene 72 des ersten Spiegels 71 in der Ansichtsebene betrachtet einem beliebigen Winkel 73 zur Mittelachse 34 angeordnet ist, wobei hierbei das optische Erfassungsmittel 29 derart angeordnet sein muss, dass es in einem Winkel 70 zur Mittelachse 34 ausgerichtet ist, welcher dem doppelten des Winkels 73 entspricht. Diese Anordnungsmöglichkeit bzw. Ausrichtung des Umlenkmittels für Lichtstrahlen gilt auch für die weiteren beschriebenen Ausführungsbeispiele, wobei der Kürze halber nicht bei jedem Ausführungsbeispiel gesondert darauf eingegangen wird.

Der Strahlengang nach dem Aufbau der Fig. 9 erfolgt folgendermaßen, dass der erste Lichtstrahl 37 von der punktförmigen Lichtquelle 28 abgestrahlt wird. Dieser wird im ersten Spiegel 71, insbesondere an der Spiegelebene 72, reflektiert und auf den rotationssymmetrischen Körper 32 geworfen, von wo er ebenfalls reflektiert wird und auf die Oberfläche 24 des Blechteils 4 geworfen wird. Von dort wird er reflektiert und als zweiter Lichtstrahl 39 zurück auf den rotationssymmetrischen Körper 32 geworfen, wobei er an diesem abermals reflektiert wird und als dritter Lichtstrahl 40 über einen zweiten Spiegel 76 auf die Lichterfassungsfläche 30 des optischen Erfassungsmittels 29 geworfen wird. Im Ausführungsbeispiel nach Fig. 9 sind der erste Spiegel 71, welcher den ersten Lichtstrahl 37 reflektiert, und der zweite Spiegel 76, welcher den dritten Lichtstrahl 40 reflektiert, übereinander liegend angeordnet und werden somit durch ein Bauteil gebildet, wobei die Spiegelebene 72 des Spiegels 71, 76 deckungsgleich ist.

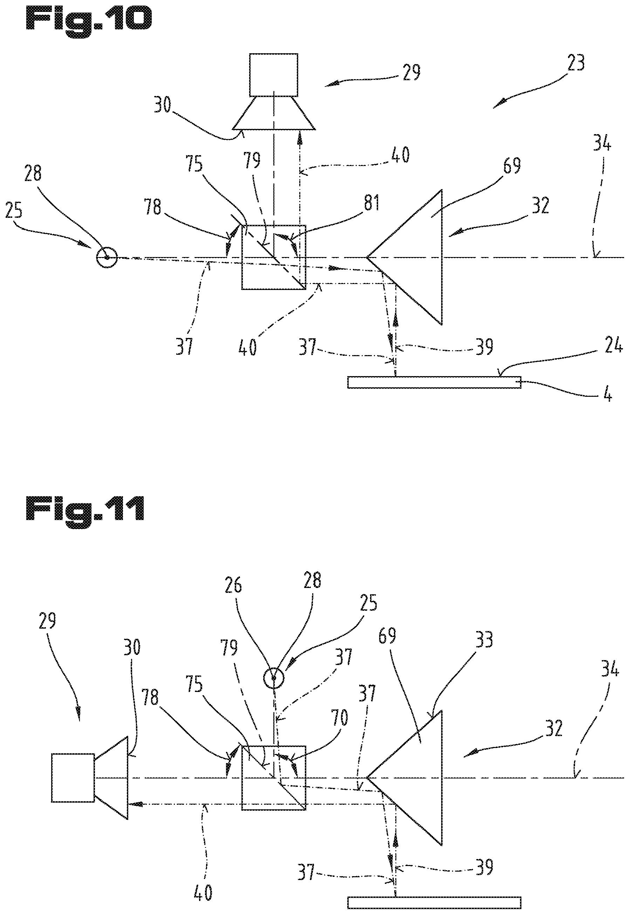

In Fig. 10 ist ein weiteres Ausführungsbeispiel der Biegewinkelmessvorrichtung 23 dargestellt. Die Beleuchtungsvorrichtung 25, insbesondere die punktförmige Lichtquelle 28 ist hierbei auf der Mittelachse 34 des rotationssymmetrischen Körpers 32 angeordnet. Das optische Erfassungsmittel 29, insbesondere die Lichterfassungsfläche 30, sind in einem Winkel 70 von 90° zur Mittelachse 34 des rotationssymmetrischen Körpers 32 angeordnet. Weiters ist ein Strahlteiler 75 vorgesehen, welcher einen auftreffenden Lichtstrahl aufteilt, wobei ein Teil des auftreffenden Lichtstrahles gespiegelt und ein weiterer Teil des auftreffenden Lichtstrahles den Strahlteiler 75 durchdringt. Insbesondere ist im Strahlteiler 75 eine Teilerebene 79 ausgebildet, an welcher der Lichtstrahl reflektiert werden kann und welche in einem Winkel 78 von 45° zur Mittelachse 34 des rotationssymmetrischen Körpers 32 angeordnet ist. Zur anschaulichen Darstellung wird in den Figuren 10 und 11 nur jener Teil des Strahlenganges in einem Strahlteiler 75 dargestellt, welcher relevant für die Auswertung des Biegewinkels 20 ist. Der jeweils geteilte, Lichtstrahl am Strahlteiler wird der Übersichtlichkeit halber nicht dargestellt.

Wie aus Fig. 10 ersichtlich, wird in dieser Ausführungsvariante der erste Lichtstrahl 37 von der Beleuchtungsvorrichtung 25 abgegeben, durchstrahlt den Strahlteiler 75, wo er entsprechend des Brechungsindex der Teilerebene 79 gebrochen wird und trifft auf den rotationssymmetrischen Körper 32 von wo er reflektiert und auf die Oberfläche 24 des Blechteiles 4 geworfen wird. Vom Blechteil 4 wird dieser als zweiter Lichtstrahl 39 reflektiert und zurück auf den rotationssymmetrischen Körper 32 geworfen, von wo er abermals reflektiert wird und als dritter Lichtstrahl 40, welcher parallel zur Mittelachse 34 ausgerichtet ist, verläuft. Der dritte Lichtstrahl 40 wird anschließend an der Teilerebene 79 des Strahlteilers 75 reflektiert und im rechten Winkel zur Mittelachse 34 verlaufend auf die Lichterfassungsfläche 30 des optischen Erfassungsmittels 29 gelenkt.

In Fig. 11 ist ein weiteres Ausführungsbeispiel der Biegewinkelmessvorrichtung 23 dargestellt, wobei in diesem Ausführungsbeispiel ebenfalls ein Strahlteiler 75 angeordnet ist, um einen Lichtstrahl entsprechend lenken zu können. In diesem Ausführungsbeispiel ist die Beleuchtungsvorrichtung 25, insbesondere die Lichtquelle 26, wie etwa eine punktförmige Lichtquelle 28, im Winkel 70 von 90° zur Mittelachse 34 angeordnet.

Der von der Beleuchtungsvorrichtung 25 abgegebene erste Lichtstrahl 37 trifft auf die Teilerebene 79 des Strahlteilers 75 von wo er reflektiert wird und auf die Oberfläche 33 des rotationssymmetrischen Körpers 32 abgegeben wird. Vom rotationssymmetrischen Körper 32 wird der erste Lichtstrahl 37 in bekannter Weise auf die Oberfläche 24 des Blechteils 4 und als zweiter Lichtstrahl 39 wieder zurück auf den rotationssymmetrischen Körper 32 geworfen. Ausgehend vom rotationssymmetrischen Körper 32 wird der zweite Lichtstrahl 39 ebenfalls reflektiert und als dritter Lichtstrahl 40 in Richtung optischen Erfassungsmittel 29 geworfen. Der dritte Lichtstrahl 40 ist hierbei ebenfalls parallel zur Mittelachse 34 ausgerichtet und passiert den Strahlteiler 75 ungebrochen, sodass auf der Lichterfassungsfläche 30 des optischen Erfassungsmittels 29 ausgewertet werden kann.

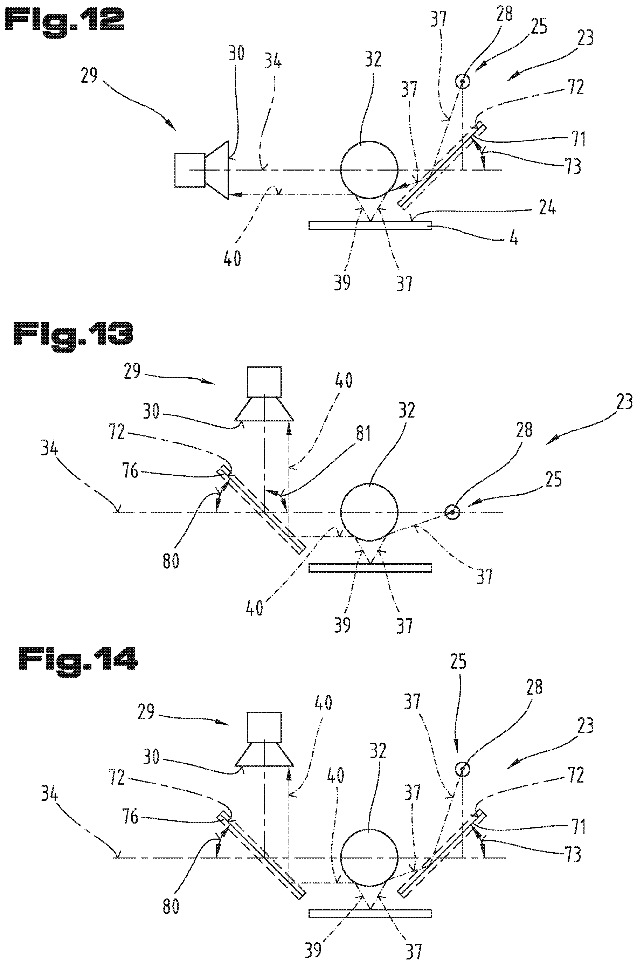

In den Fig. 12 bis 14 sind weitere Ausführungsvarianten der Biegewinkelmessvorrichtung 23 dargestellt, in welchen die Beleuchtungsvorrichtung 25 und das optische Erfassungsmittel 29 in der Ansichtsebene betrachtet an gegenüberliegender Seite bezüglich einer den rotationssymmetrischen Körper 32 schneidenden von oben nach unten verlaufenden Teilebene angeordnet sind.

In dem Ausführungsbeispiel nach Fig. 12 wird der erste Lichtstrahl 37 an der Spiegelebene 72 des ersten Spiegels 71 reflektiert und auf die Oberfläche 33 des rotationssymmetrischen Körpers 32 geworfen, von wo er ebenfalls reflektiert wird und auf die Oberfläche 24 des Blechteils 4 geworfen wird. In ebenfalls bekannter Weise wird der daraus resultierende zweite Lichtstrahl 39 abermals am rotationssymmetrischen Körper 32 reflektiert und als dritter Lichtstrahl 40, welcher parallel zur Mittelachse 34 ausgerichtet ist, vom optischen Erfassungsmittel 29 erfasst.

Im Ausführungsbeispiel nach Fig. 13 wird der erste Lichtstrahl 37 auf den rotationssymmetrischen Körper 32 geworfen und von diesem reflektiert auf die Oberfläche 24 des Blechteils 4 geworfen. Von der Oberfläche 24 reflektiert wird dieser als zweiter Lichtstrahl 39 zurück auf den rotationssymmetrischen Körper 32 geworfen. Als dritter Lichtstrahl 40 vom rotationssymmetrischen Körper 32 reflektiert wird dieser nun parallel zur Mittelachse 34 verlaufend auf die Spiegelebene 72 des zweiten Spiegels 76 geworfen und von diesem reflektiert und in einem Winkel 81 von 90° zur Mittelachse 34 des rotationssymmetrischen Körpers 32 abgelenkt. Der zweite Spiegel 76, insbesondere dessen Spiegelebene 72, ist hierbei in einem Winkel 80 von 45° zur Mittelachse 34 angeordnet.

Das Ausführungsbeispiel aus Fig. 14 beinhaltet sowohl den ersten Spiegel 71 zur Ablenkung des ersten Lichtstrahles 37 als auch den zweiten Spiegel 76 zur Ablenkung des dritten Lichtstrahles 40. Der kürze halber wird auf die genaue Strahlenführung nicht eingegangen.

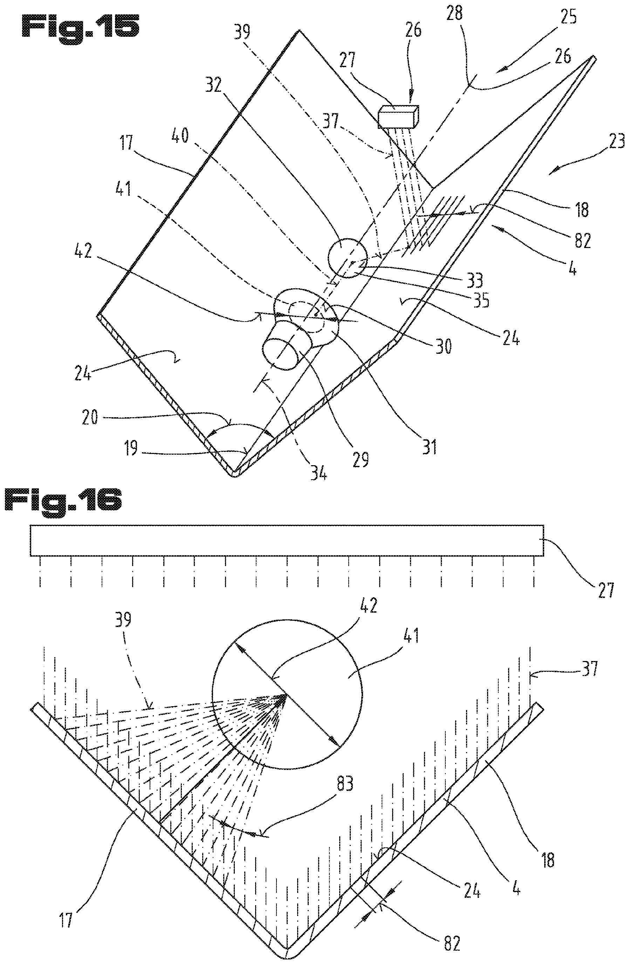

In den Figuren 15 bis 17 ist eine weitere und gegebenenfalls für sich eigenständige Ausführungsform der Biegewinkelmessvorrichtung 23 gezeigt, wobei für gleiche Teile gleiche Bezugszeichen bzw. Bauteilbezeichnungen wie in den jeweils vorangegangenen Figuren verwendet werden. Um unnötige Wiederholungen zu vermeiden, wird auf die detaillierte Beschreibung in den jeweils vorangegangenen Figuren hingewiesen bzw. Bezug genommen.

In dem Ausführungsbeispiel nach den Fig. 15 bis 17 wird davon ausgegangen, dass die Rauhigkeit der Oberfläche 24 des Blechteiles 4 gegenüber der Wellenlänge des von der Lichtquelle 26 erzeugten Lichtes vergleichsweise große Rauhigkeitsstrukturen aufweist, das heißt möglichst rau ist, wodurch es zu einer diffusen Reflexion eines auf die Oberfläche 33 einfallenden Lichtstrahles kommt und somit näherungsweise das Lambertsche Strahlungsgesetz anzuwenden ist.

Die Beleuchtungsvorrichtung 25 umfasst eine Vorrichtung 27 zur Erzeugung einer Helligkeitsverteilung. Die Vorrichtung 27 zur Erzeugung einer Helligkeitsverteilung kann beispielsweise in Form eines Streifenprojektors ausgeführt sein. Zur Erklärung dieses Ausführungsbeispiels wird davon ausgegangen, dass die Vorrichtung 27 zur Erzeugung der Helligkeitsverteilung, wie in Fig. 16 ersichtlich, gerichtete Lichtstrahlen auf die Oberfläche 24 des Blechteils 4 wirft, sodass ein Normalabstand 82 der Helligkeitsverteilung an der Oberfläche 24 des Bleches 4 für alle auf die Oberfläche 24 treffenden Helligkeitsstreifen gleich groß ist.

Wie in einer Zusammenschau der Fig. 15 bis 17 gut ersichtlich, wird der erste Lichtstrahl 37 von der Vorrichtung 27 zur Erzeugung der Helligkeitsverteilung dermaßen auf die Oberfläche 24 des Blechteiles 4 geworfen, dass auf der Oberfläche 24 des Blechteiles 4 parallel zur Biegekante 19 ausgerichtete Längsstreifen angeordnet sind, welche einen gleichmäßigen Normalabstand 82 zueinander aufweisen.

Der erste Lichtstrahl 37 wird hierbei aufgrund der rauen Oberfläche 24 des Blechteiles 4 nicht in einer gerichteten Reflexion gespiegelt, sondern wird der erste Lichtstrahl 37 diffus gestreut. Aufgrund dieser diffusen Streuung nach dem Lambertschen Strahlungsgesetz wird nicht nur ein relevanter zweiter Lichtstrahl 39, welcher im rechten Winkel auf die Oberfläche 24 des Blechteils 4 angeordnet ist, auf den rotationssymmetrischen Körper 32 geworfen, sondern werden, wie in Fig. 16 ersichtlich, auch weitere Strahlen der Helligkeitsverteilung als zweite Lichtstrahlen 39 auf den rotationssymmetrischen Körper 32 geworfen.

Entsprechend den schon zur Genüge beschriebenen Eigenschaften der spiegelnden Oberfläche 33 des rotationssymmetrischen Körpers 32 werden die zweiten Lichtstrahlen 39 nach dem Reflexionsgesetz in einer gerichteten Reflexion vom rotationssymmetrischen Körper 32 als dritter Lichtstrahl 40 auf die Lichterfassungsfläche 30 des optischen Erfassungsmittels 29 geworfen. Hierbei entsteht am optischen Erfassungsmittel 29, wie schon in den anderen Ausführungsbeispielen beschrieben, eine Kreisfläche 41, wobei der Durchmesser 42 der Kreisfläche 41 gleichgroß ist wie der Durchmesser 43 des rotationssymmetrischen Körpers 32. Die auf die Kreisfläche 41 geworfene Helligkeitsverteilung ist, wie in Fig. 16 ersichtlich, in Form eines Streifenmusters an der Kreisfläche 41 sichtbar.

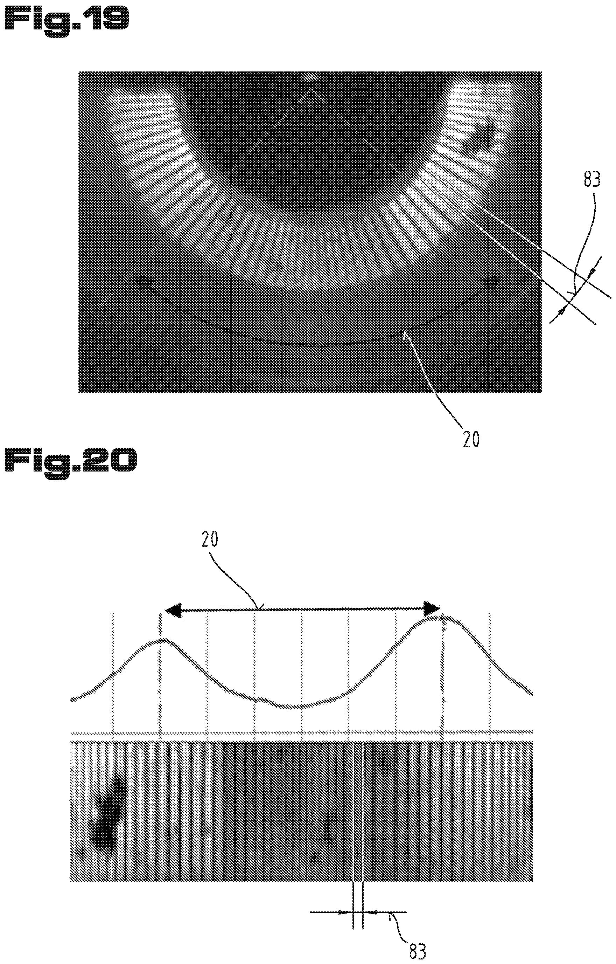

Fig. 19 zeigt eine exemplarische Auswertung des Bildsensors 31, wobei das Streifenmuster an der Kreisfläche 41 gut sichtbar ist.

Die einzelnen Helligkeitsverteilungen sind wie aus Fig. 16 und Fig. 19 ersichtlich in einem Winkelabstand 83 zueinander auf die Kreisfläche 41 verteilt. Dabei ist der Winkelabstand 83 von zwei zueinander benachbarten zweiten Lichtstrahlen 39 über den Umfang der Kreisfläche 41 verteilt unterschiedlich groß. Dies resultiert aus den gezeigten, geometrischen Zusammenhängen aus Fig. 16. Hierbei kann festgestellt werden, dass jene zweiten Lichtstrahlen 39, welche im Bereich des rechten Winkels zur Oberfläche 24 des Blechteiles 4 liegen, den größten Winkelabstand 83 zueinander aufweisen. Aus dieser Erkenntnis kann an der Kreisfläche 41 jenes Kreissegment ermittelt werden, welches im rechten Winkel auf die Oberfläche 24 des Blechteils 4 steht, indem der Winkelabstand 83 der auf die Kreisfläche 41 projizierten Helligkeitsverteilungen ausgewertet wird. Eine derartige Auswertung ist exemplarisch in Fig. 20 dargestellt, wobei eine Abwicklung der auf die Kreisfläche 41 projizierten Helligkeitsverteilungen dargestellt ist. Über dieser Abwicklung der Helligkeitsverteilungen ist der Verlauf des Linienabstandes aufgetragen. Aus Fig. 20 ist ersichtlich, dass der Verlauf des Linienabstandes zwei Maxima aufweist. Der aktuelle Biegewinkel 20 ist aufgrund der obig beschriebenen Zusammenhänge genau zwischen diesen beiden Maxima des Winkelabstandes 83 abzulesen.

Ein besonderer Vorteil dieser Messmethode bzw. dieses Ausführungsbeispiels nach den Fig. 15 bis 17 liegt darin, dass Bleche mit einer schlecht spiegelnden Oberfläche bzw. Bleche mit lokalen Fehlstellen oder Unebenheiten gut bezüglich deren Biegewinkel 20 vermessen werden können.

In einem nicht weiter dargestellten Ausführungsbeispiel ist es entsprechend obig beschriebenem Messverfahren auch möglich, dass die Vorrichtung 27 zur Erzeugung einer Helligkeitsverteilung keine parallel gerichteten ersten Lichtstrahlen 37 abgibt, sondern dass der erste Lichtstrahl 37 in einer annähernd punktförmigen Lichtquelle erzeugt wird und somit der Normalabstand 82 der unterschiedlichen Helligkeitsstreifen an der Oberfläche 24 des Bleches 4 unterschiedlich groß ist. Hierbei ist es notwendig, dass in der Auswertung des Messergebnisses, insbesondere des Winkelabstandes 83 die Verzerrung des Normalabstandes 82 berücksichtigt, wodurch auch die Darstellung des Winkelabstandes 83 an der Kreisfläche 41 verzerrt ist. Dadurch ist der aktuelle Biegewinkel 20 nicht exakt zwischen den beiden Maxima des Winkelabstandes 83 abzulesen, sondern ist über Berechnungsmethoden die Verzerrung mit einzurechnen.

Weiters ist es auch denkbar, dass sowohl die Messmethodik zur Bestimmung des Biegewinkels 20 mittels einer punktförmigen Lichtquelle 28, wie sie in den Fig. 2 bis 4 beschrieben ist, als auch die Messmethode unter Verwendung einer Vorrichtung 27 zur Erzeugung einer Helligkeitsverteilung, wie sie in den Fig. 15 bis 17 beschrieben ist, angewendet werden. Hierbei kann vorteilhaft sein, dass verschiedene Arten von Blechteilen 4 mit unterschiedlichen Oberflächenbeschaffenheiten bezüglich deren aktueller Biegewinkel 20 während des Biegevorganges gut vermessen werden können bzw. dass die Messergebnisse der beiden Messmethodiken gegenseitig kontrolliert bzw. abgeglichen werden können.

Da das Reflexionsverhalten, das heißt ob gerichtete Reflexion oder diffuse Reflexion auftritt, vom Verhältnis der Wellenlänge des auf die Oberfläche einfallenden Lichtstrahles zur Rauigkeit der Oberfläche abhängt, kann es sinnvoll sein, wenn für die Messmethodik nach den Fig. 2 bis 4 ein Licht mit einer großen Wellenlänge, etwa Infrarotlicht, verwendet wird, um an der Oberfläche 24 des Blechteils 4 möglichst eine gerichtete Reflexion zu erzeugen und wenn die Vorrichtung 27 zur Erzeugung einer Helligkeitsverteilung ein Licht mit einer kurzen Wellenlänge, etwa ein ultraviolettes Licht, abgibt, um für die Messmethodik nach Fig. 15 bis 17 eine möglichst diffuse Abstrahlung an der Oberfläche 24 des Blechteils 4 zu erhalten.

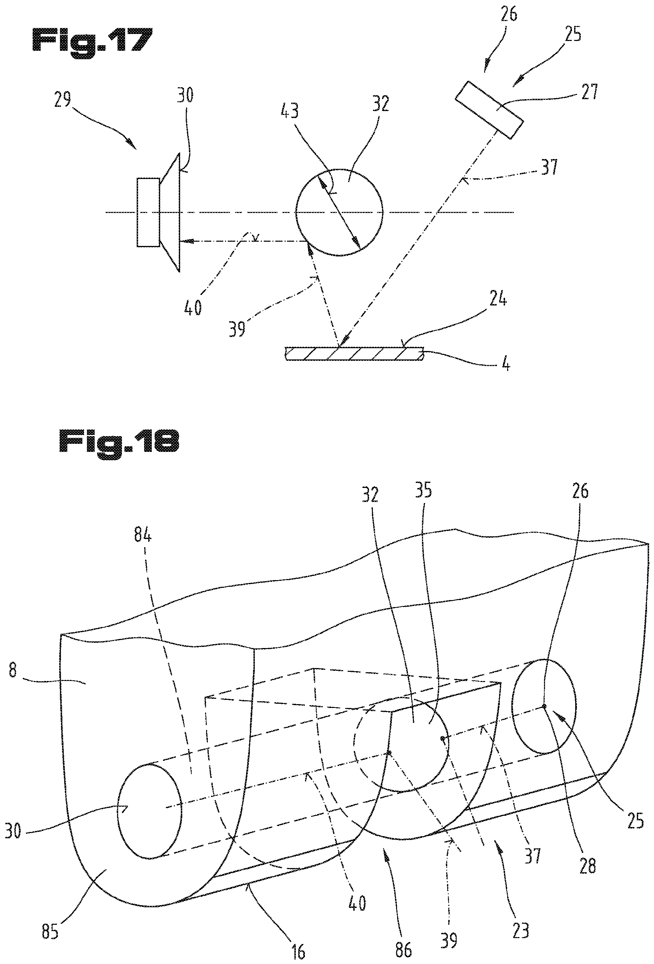

Fig. 18 zeigt eine perspektivische Ansicht eines Biegestempels 8, insbesondere den Arbeitsbereich des Biegestempels 8 an welcher die Arbeitskante 16 angeordnet ist, wobei in den Biegestempel 8 die Biegewinkelmessvorrichtung 23 integriert ist. Insbesondere kann vorgesehen sein, dass im Biegestempel 8 eine parallel zur Arbeitskante 16 verlaufende Bohrung 84 eingebracht ist, in welcher die Lichtquelle 26, insbesondere eine punktförmige Lichtquelle 28 sowie der rotationssymmetrische Körper 32 eingebracht sind. Hierbei dient der Biegestempel 8 gleichzeitig als Einhausung 85, sodass die Biegewinkelmessvorrichtung 23 vor unerwünschtem Lichteinfall bzw. vor anderen Umgebungseinflüssen geschützt ist. Um den Eintritt bzw. den Austritt des relevanten Lichtstrahls zur Bestimmung des Biegewinkels 20 zu ermöglichen, ist eine Ausnehmung 86 vorgesehen, in welcher der rotationssymmetrische Körper 32 aufgenommen ist.

Alternativ zu dieser Ausführungsvariante nach Fig. 18 ist es auch denkbar, dass die Einhausung 85 durch einen einfachen rohrförmigen Körper gebildet wird, sodass die Biegewinkelmessvorrichtung unabhängig vom Biegestempel 8 an der Biegemaschine 2 positioniert werden kann.

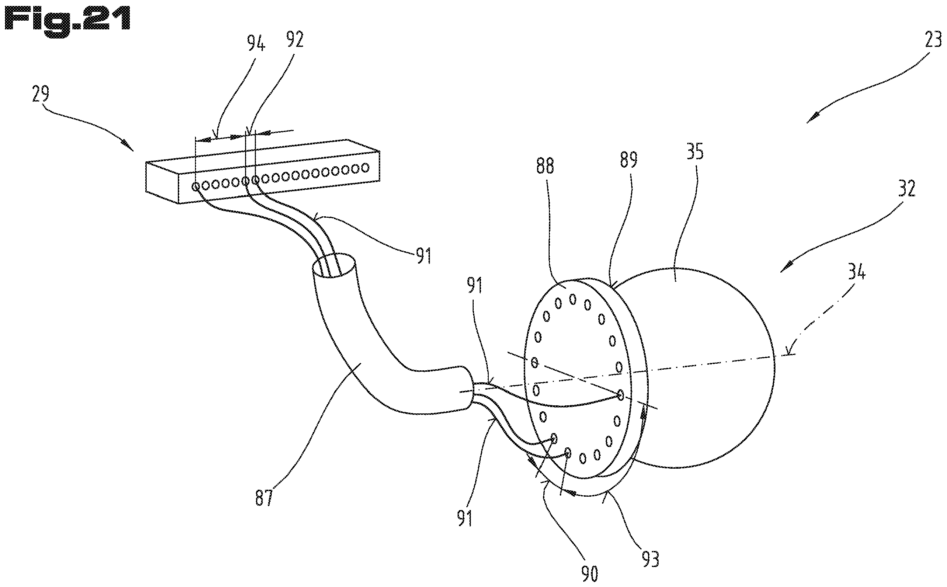

In der Fig. 21 ist eine weitere und gegebenenfalls für sich eigenständige Ausführungsform der Biegewinkelmessvorrichtung 23 gezeigt, wobei für gleiche Teile gleiche Bezugszeichen bzw. Bauteilbezeichnungen wie in den vorangegangenen Figuren 1 bis 20 verwendet werden. Um unnötige Wiederholungen zu vermeiden, wird auf die detaillierte Beschreibung in den vorangegangenen Figuren 1 bis 20 hingewiesen bzw. Bezug genommen.

In der in Fig. 21 dargestellten möglichen Ausführungsvariante der Biegewinkelmessvorrichtung 23 wird der dritte Lichtstrahl 40 nicht direkt auf das optische Erfassungsmittel 29 geleitet, sondern ist zwischen rotationssymmetrischem Körper 32 und optischem Erfassungsmittel 29 ein Lichtwellenleiter 87 angeordnet. Hierbei kann vorgesehen sein, dass der Lichtwellenleiter 87 ein Lichteingangsmodul 88 aufweist, wobei der dritte Lichtstrahl 40 an eine kreisförmige Eingangsfläche 89 des Lichteingangsmodules 88 geworfen wird. An der Eingangsfläche 89 sind in einem gleichmäßigen kreisförmigen Winkelabstand 90 mehrere Fasern 91 angeordnet. Die einzelnen Fasern 91 des Lichtwellenleiters 87 leiten den jeweils auftreffenden dritten Lichtstrahl 40 auf das optische Erfassungsmittel 29. Das optische Erfassungsmittel 29 kann hierbei eindimensional ausgebildet sein, wobei die einzelnen Fasern 91 linienförmig in einem Abstand 92 zueinander am optischen Erfassungsmittel 29 angeordnet sind. Über die aktuell beleuchtete Faser 91 und damit im Zusammenhang ein Absolutwinkel 93 bzw. die entsprechende Zuordnung am optischen Erfassungsmittel 29 mittels eines Absolutabstandes 94 kann der aktuelle Biegewinkel 20 gemessen bzw. berechnet werden. Von Vorteil an dieser Ausführungsvariante ist, dass das optische Erfassungsmittel 29 platzsparend an der Biegewinkelmessvorrichtung 23 angeordnet werden kann, um den Biegevorgang nicht zu beeinflussen. Weiters ist von Vorteil, dass ein derartiges lineares optisches Erfassungsmittel 29 einfach aufgebaut sein kann.

In einem weiteren, nicht dargestellten, Ausführungsbeispiel kann vorgesehen sein, dass auch der in der Beleuchtungsvorrichtung 25 erzeugte erste Lichtstrahl 37 mittels einem Lichtwellenleiter auf das Blechteil 4 oder den rotationssymmetrischen Körper 32 geleitet wird.

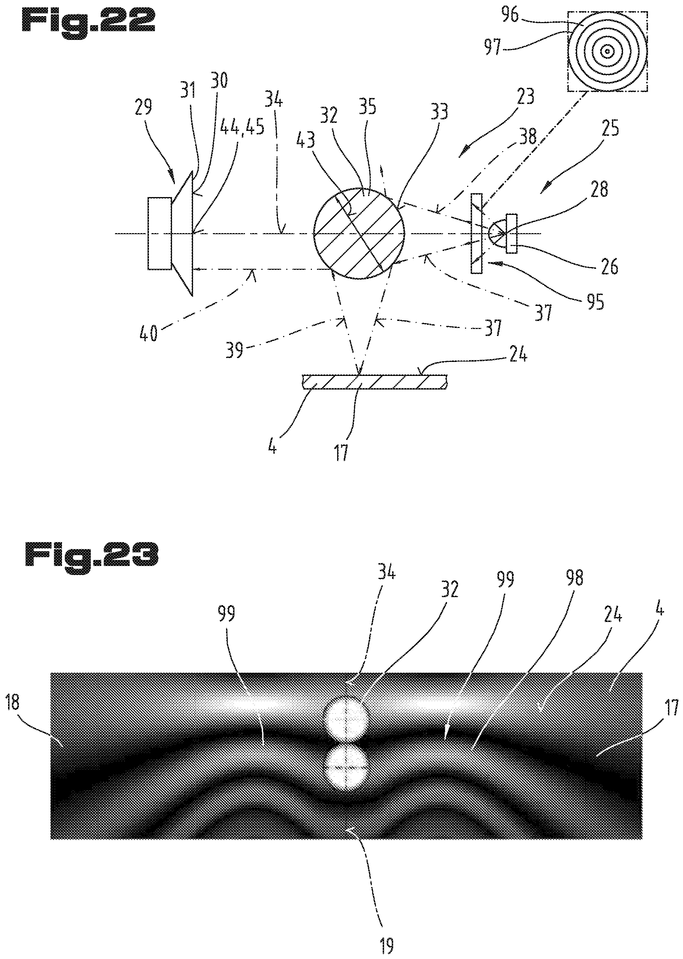

In den Fig. 22 bis 25 ist eine weitere und gegebenenfalls für sich eigenständige Ausführungsform der Biegewinkelmessvorrichtung 23 gezeigt, wobei für gleiche Teile gleiche Bezugszeichen bzw. Bauteilbezeichnungen wie in den vorangegangenen Figuren 1 bis 21 verwendet werden. Um unnötige Wiederholungen zu vermeiden, wird auf die detaillierte Beschreibung in den vorangegangenen Figuren 1 bis 21 hingewiesen bzw. Bezug genommen.

Fig. 22 zeigt die Ausführungsform der Biegewinkelmessvorrichtung 23 in einer Ansicht entsprechend Fig. 4. Bei dieser Ausführungsform der Biegewinkelmessvorrichtung 23 ist eine Filterscheibe 95 ausgebildet, welche im Bereich des ersten Lichtstrahles 37, insbesondere zwischen der Beleuchtungsvorrichtung 25 und dem rotationssymmetrischen Körper 32 angeordnet ist. Wie aus der Querschnittsansicht der Filterscheibe ersichtlich, ist vorgesehen, dass die Filterscheibe 95 einen lichtdurchlässigen Bereich 96 und einen lichtundurchlässigen Bereich 97 aufweist. Der lichtdurchlässige Bereich 96 und der lichtundurchlässige Bereich 97 sind vorzugsweise in Form von konzentrisch angeordneten Kreisen ausgebildet, wobei im das folgende Ausführungsbeispiel anhand von derart konzentrisch angeordneten Kreisen beschrieben wird. Alternativ dazu ist es auch denkbar, dass anstatt der konzentrisch zueinander angeordneten Kreise andere Muster verwendet werden.

Die Dicke dieser Kreise zueinander ist nicht maßgeblich für die unten beschriebene Funktionalität der Filterscheibe 95. Es erscheint jedoch als sinnvoll, wenn die lichtdurchlässigen Bereiche 96 eher gering gehalten werden. Dadurch werden feine Linien auf den rotationssymmetrischen Körper 32 projiziert. Die Filterschiebe 95 kann beispielsweise durch einen transparenten Kunstsoff, ein Glas oder sonst einen transparenten Körper gebildet sein, an welchem Teilbereiche abgedunkelt sind und somit ein lichtundurchlässiger Bereich 97 gebildet wird. Die Abdunkelung kann beispielsweise in Form von einer aufgeklebten Folie, einer aufgetragenen Farbe, durch Ätzen des transparenten Körpers oder durch eine sonstige bekannte Methode erfolgen.

Alternativ dazu ist es möglich, dass die lichtundurchlässigen Bereiche 97 durch intransparente Materialien gebildet werden und die lichtdurchlässigen Bereiche 96 durch fehlen von Material, daher durch Luftspalte gebildet werden.

Der erste Lichtstrahl 37, insbesondere die durch die Filterscheibe 95 erzeugten Helligkeitsverteilungen in Form von Kreisringen, welche auf den rotationssymmetrischen Körper 32 projiziert werden, werden von diesem reflektiert und auf die Oberfläche 24 des Blechteils 4 geworfen.

An der Oberfläche 24 des Blechteils 4 erscheinen die Helligkeitsverteilungen in Form von Hyperbeln 98, wie sie in Fig. 23 zu sehen sind. Die Fig. 23 zeigt eine Draufsicht auf ein Blechteil 4. Die Hyperbeln 98 weisen dort wo das die Oberfläche 24 des Blechteils 4 im rechten Winkel auf die Mittelachse 34 steht ein Maximum 99 bzw. einen Scheitelpunkt auf.

In dem in Fig. 23 gezeigten Ausführungsbeispiel liegt in der Draufsicht die Mittelachse 34 deckungsgleich mit der Biegekante 19 und die beiden Blechschenkel 17, 18 sind gleich weit aufgebogen. Somit haben die Hyperbeln auf dem ersten Blechschenkel 17 und auf dem zweiten Blechschenkel 18 ein gleiches Erscheinungsbild. Die Mittelachse 34 kann auch zur Biegekante 19 parallel verschoben sein, wobei das Erscheinungsbild der Hyperbeln 98 verzerrt wird, jedoch der Scheitelpunkt der Hyperbeln 98 nach wie vor dort liegt, wo die Oberfläche 24 des Blechteils 4 im rechten Winkel auf die Mittelachse 34 steht.

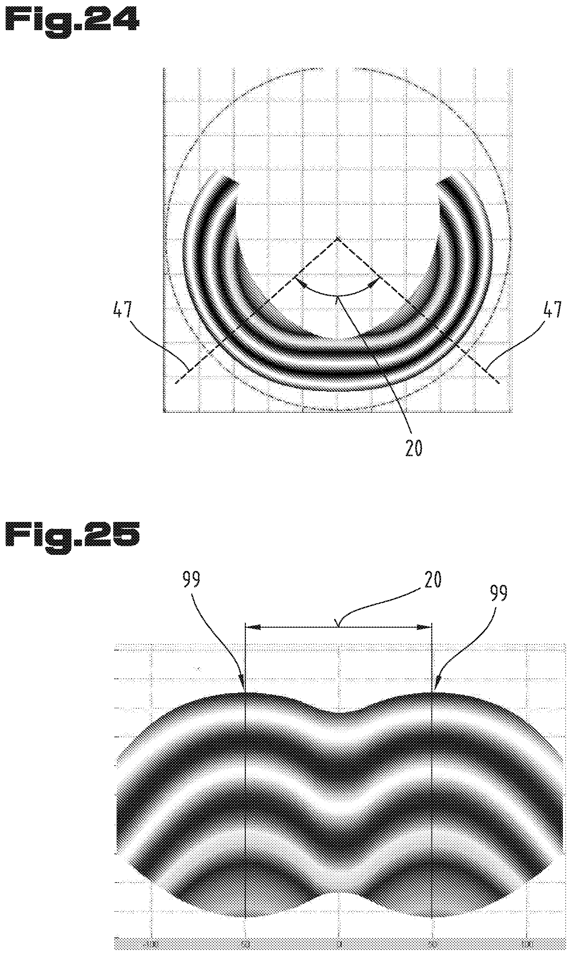

Fig. 24 zeigt analog zu den Figuren 5 und 19 das Ergebnis des auf das optische Erfassungsmittel 29 projizierten dritten Lichtstrahles 40. Wie aus Fig. 24 ersichtlich, kann das Maximum 99 der Hyperbeln 98 auch in der Projektion am Erfassungsmittel abgelesen werden. Somit kann gefolgert werden, dass, wenn man dieses Maximum mittels einer Geraden 47 mit dem Mittelpunkt 45 der Kreisfläche 41 verbindet, auch diese Gerade 47 im rechten Winkel auf das Blechteil 4 respektive deren Schenkel 17, 18 steht. Somit kann der Biegewinkel 20, wie aus Fig. 5 ersichtlich, auch zwischen diesen beiden Geraden 47 abgelesen werden.

Fig. 25 zeigt analog zu Fig. 20 das abgewickelte Bild einer derartigen Helligkeitsverteilung in Form von Hyperbeln. In der Abwicklung sind die Maxima 99 bzw. Scheitelpunkte der Hyperbeln besser ersichtlich.

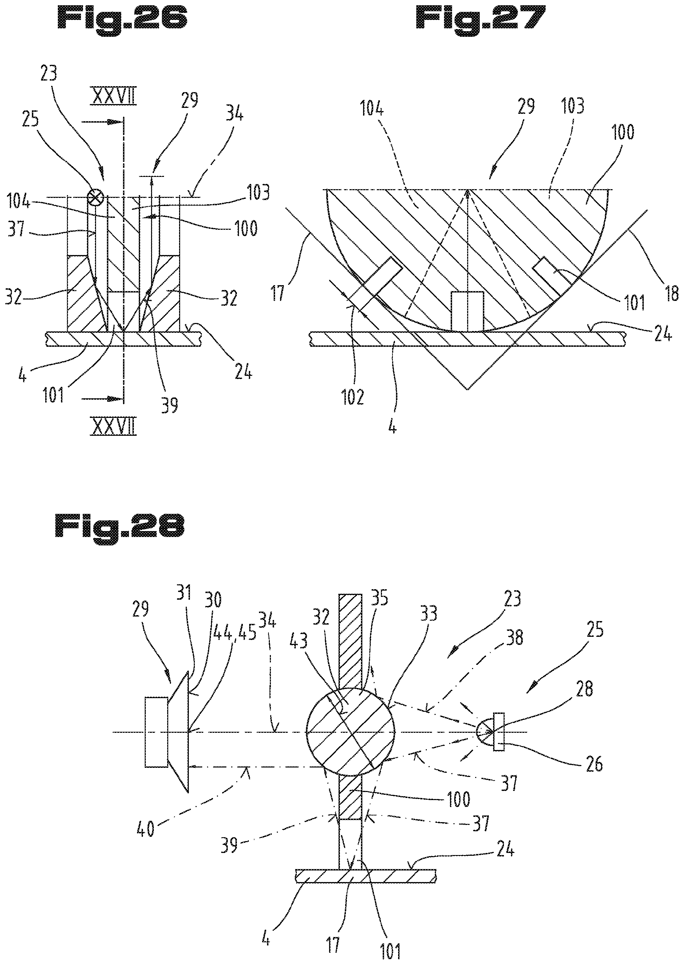

In den Fig. 26 und 27 ist eine weitere und gegebenenfalls für sich eigenständige Ausführungsform der Biegewinkelmessvorrichtung 23 gezeigt, wobei für gleiche Teile gleiche Bezugszeichen bzw. Bauteilbezeichnungen wie in den vorangegangenen Figuren 1 bis 25 verwendet werden. Um unnötige Wiederholungen zu vermeiden, wird auf die detaillierte Beschreibung in den vorangegangenen Figuren 1 bis 25 hingewiesen bzw. Bezug genommen.

Fig. 26 zeigt einen Querschnitt der Biegewinkelmessvorrichtung 23 entlang der Mittelachse 34. Fig. zeigt einen Schnitt durch die Biegewinkelmessvorrichtung 23 gemäß der Schnittlinie XXVII - XXVII in Fig. 26.

Wie aus Fig. 26 ersichtlich, kann vorgesehen sein, dass zwei rotationssymmetrische Körper 32 ausgebildet sind, wobei die beiden rotationssymmetrischen Körper 32 in Form von Konusspiegeln ausgebildet sind. Hierbei kann zwischen den beiden rotationssymmetrischen Körpern 32 eine Scheibenblende 100 angeordnet sein, welche zumindest zwei Blendenöffnungen 101 zum Durchlass von Licht aufweist. Die Blendenöffnungen 101 können ein Winkelsegment 102 zum Durchtritt eines Lichtstrahles durch die Scheibenblende 100 freigeben. Vorzugsweise ist die Scheibenblende 100 koaxial zur Mittelachse 34 angeordnet. Insbesondere kann vorgesehen sein, dass die Scheibenblende 100 während des Biegevorganges oder zumindest während des Winkelmessvorganges an dem Blechteil 4 anliegt.

Der erste Lichtstrahl 37 wird von der Beleuchtungsvorrichtung 25 abgegeben und trifft auf den ersten rotationssymmetrischen Körper 32, welcher in Form eines Konus ausgebildet ist. Vom ersten rotationssymmetrischen Körper 32 wird der erste Lichtstrahl 37 anschließend auf die Oberfläche 24 des Blechteils 4 geworfen und von diesem als zweiter Lichtstrahl 39 reflektiert, wobei dieser die Scheibenblende 100 im Bereich einer Blendenöffnung 101 passiert. Die Blendenöffnung 101 muss dabei im rechten Winkel auf den jeweiligen Schenkel 17, 18 des zu erfassenden Blechteils 4 stehen. Der zweite Lichtstrahl 39 wird anschließend auf den zweiten rotationssymmetrischen Körper 32 geworfen und als dritter Lichtstrahl 40 von diesem auf das optische Erfassungsmittel 29 geworfen. Wie aus den Figuren 26 und 27 ersichtlich, kann vorgesehen sein, dass das optische Erfassungsmittel 29 parallel zur Oberfläche 24 eines noch nicht gebogenen und sich in Ruhelage befindlichen Blechteils 4 angeordnet ist.

Durch die Blendenöffnung 101 bzw. die Scheibenblende 100 werden jene Lichtstrahlen gefiltert bzw. geblockt, welche nicht im rechten Winkel auf das Blechtreffen. Dadurch kann vermieden werden, dass die Auswertung des aktuellen Biegewinkels durch störende Lichtreflexionen erschwert bzw. ein Ergebnis verfälscht wird. Beispielsweise können Störerscheinungen, wie sie in Fig. 5 ersichtlich sind dadurch vermieden werden.

Um die Funktionalität der Blendenscheibe 100 zu gewährleisten, muss sichergestellt werden, dass die Blendenöffnungen 101 an den tatsächlich anliegenden Biegewinkel angepasst sind. Dies kann beispielsweise dadurch erreicht werden, dass die Blendenscheibe 100 eine große Anzahl an Blendenöffnungen 101 aufweist, wobei die Anzahl der Blendenöffnungen 101 die Auflösegenauigkeit der Biegewinkelmessvorrichtung 23 beeinflusst bzw. bestimmt.

In einer alternativen Ausführungsvariante kann vorgesehen sein, dass zwei Scheibenteile 103, 104 koaxial zueinander angeordnet sind und dass jedes der Scheibenteile 103, 104 nur eine oder wenige Blendenöffnungen 101 aufweist und dass die beiden Scheibenteile 103, 104 relativ zueinander verdrehbar sind, sodass die Blendenöffnungen 101 derart voreingestellt werden können, sodass die den Bereich des voraussichtlich herzustellenden Biegewinkels mit einer ausreichend großen Toleranz freigeben. Der tatsächlich anliegende Biegewinkel kann anschließend mittels dem bereits beschriebenen Verfahren bestimmt werden, wobei die Erfassungsqualität aufgrund der Blendenscheibe 100 verbessert werden kann.

In der Fig. 28 ist eine weitere und gegebenenfalls für sich eigenständige Ausführungsform der Biegewinkelmessvorrichtung 23 gezeigt, wobei für gleiche Teile gleiche Bezugszeichen bzw. Bauteilbezeichnungen wie in den vorangegangenen Figuren 1 bis 27 verwendet werden. Um unnötige Wiederholungen zu vermeiden, wird auf die detaillierte Beschreibung in den vorangegangenen Figuren 1 bis 27 hingewiesen bzw. Bezug genommen.

In dem Ausführungsbeispiel in Fig. 28 ist ebenfalls eine Scheibenblende ausgebildet, wobei die Scheibenblende 100 den zentral angeordneten rotationssymmetrischen Körper 32 umgebend angeordnet ist.

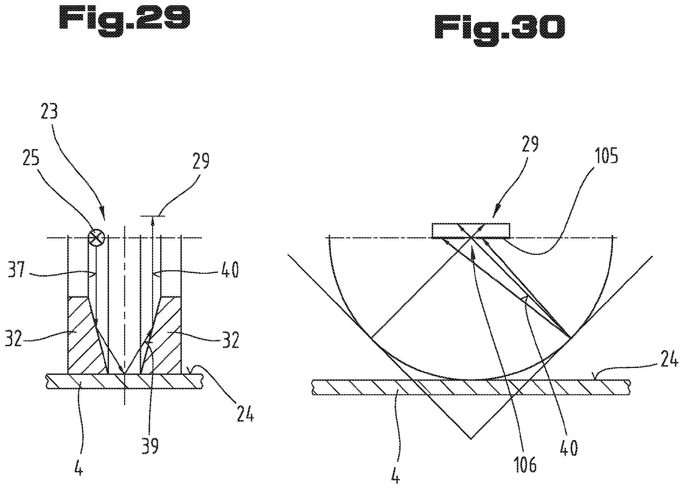

In den Figuren 29 und 30 ist eine weitere und gegebenenfalls für sich eigenständige Ausführungsform der Biegewinkelmessvorrichtung 23 gezeigt, wobei für gleiche Teile gleiche Bezugszeichen bzw. Bauteilbezeichnungen wie in den vorangegangenen Figuren 1 bis 28 verwendet werden. Um unnötige Wiederholungen zu vermeiden, wird auf die detaillierte Beschreibung in den vorangegangenen Figuren 1 bis 28 hingewiesen bzw. Bezug genommen.

Die Biegewinkelmessvorrichtung 23 der Figuren 29 und 30 ist ähnlich zu der Biegewinkelmessvorrichtung 23 der Figuren 26 und 27 aufgebaut. Im Gegensatz zu diesem vorher beschriebenen Ausführungsbeispiel ist jedoch in der beschriebenen Ausführungsvariante anstatt der Scheibenblende 100 eine Streifenblende 105 vorgesehen. Die Streifenblende 105 ist direkt vor dem optischen Erfassungsmittel 29 angeordnet und weist eine zentrale Blendenöffnung 106 auf. Einfallendes Licht kann nur durch diese zentrale Blendenöffnung 106 auf die Lichterfassungsfläche 30 des optischen Erfassungsmittels 29 gelangen. Wie aus Fig. 30 ersichtlich treten nur jene Lichtstrahlen durch diese zentrale Blendenöffnung 106 hindurch, welche als dritte Lichtstrahlen 40 im rechten Winkel von der Oberfläche 24 des Blechteils 4 reflektiert werden. Die Größe der Blendenöffnung 106 kann variiert und die Erfordernisse des Messaufbaus angepasst werden.

Die Ausführungsbeispiele zeigen mögliche Ausführungsvarianten der Biegewinkelmessvorrichtung 23, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Vor allem können die einzelnen in den Fig. 1 bis 21 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus der Biegewinkelmessvorrichtung 23 bzw. der Bearbeitungsanlage 1 diese bzw. deren Bestandteile teilweise unmaßstäblich und/oder vergrößert und/oder verkleinert dargestellt wurden.

<div align="center"><strong>Bezugszeichenaufstellung</strong></div>

| | | | | |
|---|---|---|---|---|
| 1 | Bearbeitungsanlage | | 30 | Lichterfassungsfläche |
| 2 | Biegemaschine | | 31 | Bildsensor |
| 3 | Abkantpresse | | 32 | rotationssymmetrischer Körper |
| 4 | Blechteil | | 33 | Oberfläche rotationssymmetrischer Körper |
| 5 | Maschinengestell | | | |
| 6 | oberer Pressbalken | | 34 | Mittelachse |
| 7 | erste Werkzeugaufnahme | | 35 | Kugel |
| 8 | Biegestempel | | 36 | Ebene ε |
| 9 | unterer Pressbalken | | 37 | erster Lichtstrahl |
| 10 | zweite Werkzeugaufnahme | | 38 | nicht relevanter Strahlengang |
| 11 | Biegegesenk | | 39 | zweiter Lichtstrahl |
| 12 | Blechauflagefläche | | 40 | dritter Lichtstrahl |
| 13 | Pressenantriebseinheit | | 41 | Kreisfläche |
| 14 | obere Endposition | | 42 | Durchmesser Kreisfläche |
| 15 | untere Endposition | | 43 | Durchmesser rotationssymmetrischer Körper |
| 16 | Arbeitskante | | | |
| 17 | erster Schenkel | | 44 | Zentrum Lichterfassungsfläche |
| 18 | zweiter Schenkel | | 45 | Mittelpunkt Kreisfläche |
| 19 | Biegekante | | 46 | Maximum der Lichtstärke |
| 20 | Biegewinkel | | 47 | Gerade |
| 21 | Rechnereinheit | | 48 | erster Winkel |
| 22 | Eingabe- Anzeigeeinheit | | 49 | zweiter Winkel |
| 23 | Biegewinkelmessvorrichtung | | 50 | Kollimator |
| 24 | Oberfläche Blechteil | | 51 | Parabolspiegel |
| 25 | Beleuchtungsvorrichtung | | 52 | Abstand (r) Maximum Lichtstärke - Mittelpunkt Kreisfläche |
| 26 | Lichtquelle | | | |
| 27 | Vorrichtung zur Erzeugung Helligkeitsverteilung | | 53 | Radius (R) Kugel |
| | | | 54 | Abstand ($D_r$) Blechteil - Mittelachse |
| 28 | punktförmige Lichtquelle | | | |
| 29 | optisches Erfassungsmittel | | 55 | Abstand (D) |
| 56 | Abstand (S) | | 86 | Ausnehmung |
| 57 | Winkel (α) | | 87 | Lichtwellenleiter |
| 58 | Reflektionswinkel (β) | | 88 | Lichteingangsmodul |
| 59 | Abstand Kugel-Kugel | | 89 | Eingangsfläche |
| 60 | Symmetrieebene | | 90 | Winkelabstand |
| 61 | Abstand Kugel- Symmetrieebene | | 91 | Faser |
| 62 | Punkt P1 | | 92 | Abstand |
| 63 | Punkt P2 | | 93 | Absolutwinkel |
| 64 | Punkt P3 | | 94 | Absolutabstand |

(fortgesetzt)

| | | | | |
|---|---|---|---|---|
| 65 | Punkt P4 | | 95 | Filterscheibe |
| 66 | Punkt P5 | | 96 | lichtdurchlässiger Bereich |
| 67 | Punkt P6 | | 97 | lichtundurchlässiger Bereich |
| 68 | Biegeradius | | 98 | Hyperbel |
| 69 | Kegel | | 99 | Maximum |
| 70 | Winkel der Ablenkung erster Lichtstrahl | | 100 | Scheibenblende |
| | | | 101 | Blendenöffnung |
| 71 | erster Spiegel | | 102 | Winkel segment |
| 72 | Spiegelebene | | 103 | erstes Scheibenteil |
| 73 | Winkel Anordnung erster Spiegel | | 104 | zweites Scheibenteil |
| 74 | Zentrum erster Spiegel | | 105 | Streifenblende |
| 75 | Strahlteiler | | 106 | zentrale Blendenöffnung |
| 76 | zweiter Spiegel | | | |
| 77 | Zentrum zweiter Spiegel | | | |
| 78 | Winkel Anordnung Strahlteiler | | | |
| 79 | Teilerebene | | | |
| 80 | Winkel Anordnung zweiter Spiegel | | | |
| 81 | Winkel der Ablenkung dritter Lichtstrahl | | | |
| 82 | Normalabstand | | | |
| 83 | Winkelabstand | | | |
| 84 | Bohrung | | | |
| 85 | Einhausung | | | |

**Patentansprüche**

1. Biegewinkelmessvorrichtung (23) für eine Biegemaschine (2), insbesondere Abkantpresse (3), wobei ein zu biegendes Blechteil (4) in der Biegemaschine (2) angeordnet ist, welches Blechteil (4) einen ersten (17) und einen zweiten Schenkel (18) und eine zwischen den beiden Schenkel (17, 18) liegende Biegekante (19) aufweist, wobei die Biegewinkelmessvorrichtung (23) eine Beleuchtungsvorrichtung (25) mit zumindest einer Lichtquelle (26) und ein optisches Erfassungsmittel (29) mit einer Lichterfassungsfläche (30) aufweist, **dadurch gekennzeichnet, dass** an der Biegewinkelmessvorrichtung (23) zumindest ein rotationssymmetrischer Körper (32) mit einer spiegelnden Oberfläche (33) angeordnet ist, wobei eine Mittelachse (34) des rotationssymmetrischen Körpers (32) parallel zur Biegekante (19) ausgerichtet angeordnet ist, wobei ein von der Beleuchtungsvorrichtung (25) ausgesandter erster Lichtstrahl (37) vom Blechteil (4) reflektiert und als zweiter Lichtstrahl (39) zum rotationssymmetrischen Körper (32) geleitet wird und der zweite Lichtstrahl (39) an der spiegelnden Oberfläche des rotationssymmetrischen Körpers (32) reflektiert und als dritter Lichtstrahl (40) zum optischen Erfassungsmittel (29), insbesondere auf dessen Lichterfassungsfläche (30) geleitet wird.

2. Biegewinkelmessvorrichtung nach Anspruch 1, **dadurch gekennzeichnet, dass** die Lichterfassungsfläche (30) des optischen Erfassungsmittels (29) normal auf die Mittelachse (34) des rotationssymmetrischen Körpers (32) stehend angeordnet ist, wobei das Zentrum (44) der Lichterfassungsfläche (30) des optischen Erfassungsmittels (29) vorzugsweise auf der Mittelachse (34) des rotationssymmetrischen Körpers (32) liegt.

3. Biegewinkelmessvorrichtung nach einem der vorhergehenden Ansprüche, **dadurch gekennzeichnet, dass** die Beleuchtungsvorrichtung (25), der rotationssymmetrische Körper (32) und das optische Erfassungsmittel (29) auf einer gemeinsamen Achse, insbesondere auf der Mittelachse (34) des rotationssymmetrischen Körpers (32) parallel zur Biegekante (19) angeordnet sind.

4. Biegewinkelmessvorrichtung nach Anspruch 1, **dadurch gekennzeichnet, dass** an der Biegewinkelmessvorrichtung (23) ein Strahlteiler (75) in einem Winkel (78) von 45° oder ein erster Spiegel (71) in einem Winkel (73) von 45° zur Mittelachse (34) des rotationssymmetrischen Körpers (32) angeordnet ist, wobei das Zentrum (74) des ersten Spiegels (71) vorzugsweise auf der Mittelachse (34) des rotationssymmetrischen Körpers (32) liegt, wodurch ein von der Beleuchtungsvorrichtung (25) im Winkel (70) von 90° zur Mittelachse (34) erzeugter erster Lichtstrahl (37) dermaßen abgelenkt ist, dass er im Wesentlichen parallel zur Mittelachse (34) des rotationssymmetrischen Körpers (32) verläuft, wobei die Beleuchtungsvorrichtung (25) ebenfalls im Winkel (70) von 90° zur Mittelachse (34) angeordnet ist.

5. Biegewinkelmessvorrichtung nach Anspruch 1 oder 4, **dadurch gekennzeichnet, dass** an der Biegewinkelmessvorrichtung (23) ein Strahlteiler (75) oder ein zweiter Spiegel (76) in einem Winkel (81) von 45° zur Mittelachse (34) des rotationssymmetrischen Körpers (32) angeordnet ist, wobei das Zentrum (77) des zweiten Spiegels (76) vorzugsweise auf der Mittelachse (34) des rotationssymmetrischen Körpers (32) liegt, wodurch der vom rotationssymmetrischen Körper (32) abgelenkte und parallel zur Mittelachse (34) verlaufende dritte Lichtstrahl (40) in einem Winkel (80) von 90° zur Mittelachse (34) abgelenkt ist, wobei das optische Erfassungsmittel (29) ebenfalls im Winkel (80) von 90° zur Mittelachse (34) angeordnet ist.

6. Biegewinkelmessvorrichtung nach einem der vorhergehenden Ansprüche, **dadurch gekennzeichnet, dass** in der Beleuchtungsvorrichtung (25) eine im Wesentlichen punktförmige Lichtquelle (28), wie etwa eine LED, ausgebildet ist.

7. Biegewinkelmessvorrichtung nach einem der vorhergehenden Ansprüche, **dadurch gekennzeichnet, dass** die Beleuchtungsvorrichtung (25) eine Vorrichtung (27) zur Erzeugung einer Helligkeitsverteilung des ersten Lichtstrahls (37) umfasst.

8. Biegewinkelmessvorrichtung nach einem der vorhergehenden Ansprüche, **dadurch gekennzeichnet, dass** in der Beleuchtungsvorrichtung (25) ein Kollimator (50) oder ein Parabolspiegel (51) zum Erzeugen eines parallelen Strahlenverlaufs des ersten Lichtstrahls (37) ausgebildet ist.

9. Biegewinkelmessvorrichtung nach einem der vorhergehenden Ansprüche, **dadurch gekennzeichnet, dass** das optische Erfassungsmittel (29) einen zweidimensionalen Bildsensor (31) umfasst.

10. Biegewinkelmessvorrichtung nach einem der vorhergehenden Ansprüche, **dadurch gekennzeichnet, dass** der rotationssymmetrische Körper (32) als Kugel (35) ausgebildet ist.

11. Biegewinkelmessvorrichtung nach einem der vorhergehenden Ansprüche, **dadurch gekennzeichnet, dass** die Beleuchtungsvorrichtung (25), der rotationssymmetrische Körper (32) und das optische Erfassungsmittel (29) zumindest teilweise von einer Einhausung (85) umgeben sind, wobei in einem Bereich des rotationssymmetrischen Körpers (32) eine Ausnehmung in der Einhausung (85) vorgesehen ist.

12. Biegewinkelmessvorrichtung nach einem der vorhergehenden Ansprüche, **dadurch gekennzeichnet, dass** zwischen der Beleuchtungsvorrichtung (25) und dem rotationssymmetrischen Körper (32) eine Filterscheibe (95) angeordnet ist, welche lichtdurchlässige Bereiche (96) und lichtundurchlässige Bereiche (97) aufweist.

13. Biegewinkelmessvorrichtung nach Anspruch 12, **dadurch gekennzeichnet, dass** die lichtdurchlässigen Bereiche (96) und die lichtundurchlässige Bereiche (97) der Filterscheibe (95) in Form von konzentrischen Kreisen ausgebildet sind.

14. Biegewinkelmessvorrichtung nach einem der vorhergehenden Ansprüche, **dadurch gekennzeichnet, dass** eine Scheibenblende (100) ausgebildet ist, welche zwischen Beleuchtungsvorrichtung (25) und optischem Erfassungsmittel (29) angeordnet ist und Blendenöffnungen (101) aufweist, welche am Außenumfang der Scheibenblende (100) angeordnet sind und sich über ein Winkelsegment (102) erstrecken, wobei eine Rotationsachse der Scheibenblende (100) im Wesentlichen koaxial mit der Mittelachse (34) des rotationssymmetrischen Körpers (32) liegt.

15. Biegewinkelmessvorrichtung nach Anspruch 14, **dadurch gekennzeichnet, dass** über den vollen Umfangswinkel verteilt mehrere Blendenöffnungen (101) ausgebildet sind, wobei die Segmentierung der Blendenöffnungen (101) an die Auflösegenauigkeit des optischen Erfassungsmittels (29) angepasst ist.

16. Biegewinkelmessvorrichtung nach einem der vorhergehenden Ansprüche, **dadurch gekennzeichnet, dass** eine Streifenblende (105) ausgebildet ist, welche direkt vor dem optischen Erfassungsmittel (29) angeordnet ist und eine zentrale Blendenöffnung (106) aufweist.

17. Biegemaschine (2), insbesondere Abkantpresse (3), umfassend ein Maschinengestell, einen oberen (6) und einen unteren Pressbalken (9), sowie an den Pressbalken (6, 9) angeordnete bzw. ausgebildete Werkzeugaufnahmen (7, 10) und in den Werkzeugaufnahmen (7, 10) aufgenommen einen Biegestempel (8) und ein Biegegesenk (11), wobei ein zu biegendes Blechteil (4) zwischen Biegestempel (8) und Biegegesenk (11) angeordnet ist, wodurch eine zwischen einem ersten (17) und einem zweiten Schenkel (18) des Blechteiles (4) liegende Biegekante (19) deckungsgleich zu einer Arbeitskante (16) des Biegestempels (8) liegt, sowie zumindest einer Biegewinkelmessvorrichtung (23), **dadurch gekennzeichnet, dass** die Biegewinkelmessvorrichtung (23) nach einem der vorhergehenden Ansprüche ausgebildet ist.

18. Verfahren zur Bestimmung eines Biegewinkels (20) eines Blechteils (4), insbesondere unter Verwendung einer Biegewinkelmessvorrichtung (23) nach einem der Ansprüche 1 bis 16, wobei das Blechteil (4) durch eine Biegemaschine (2) verformt wird, wodurch sich am Blechteil (4) eine Biegekante (19) zwischen einem ersten (17) und einem zweiten Schenkel (18) bildet, wobei die Biegewinkelmessvorrichtung (23) eine Beleuchtungsvorrichtung (25) mit zumindest einer Lichtquelle (26), ein optisches Erfassungsmittel (29) mit einer Lichterfassungsfläche (30) und einen rotationssymmetrischen Körper (32) mit einer Mittelachse (34) und einer spiegelnden Oberfläche (33) aufweist, wobei die Mittelachse (34) des rotationssymmetrischen Körpers (32) parallel zur Biegekante (19) ausgerichtet angeordnet ist, wobei die Bestimmung des Biegewinkels (20) der beiden Schenkel (17) zueinander zumindest folgende Schritte umfasst:

   - abgeben eines ersten Lichtstrahles (37) von der Beleuchtungsvorrichtung (25), welcher erste Lichtstrahl (37) in dessen Pfad an einer Oberfläche (24) des Blechteils (4) reflektiert wird, wodurch ein zweiter Lichtstrahl (39) gebildet wird, welcher an der spiegelnden Oberfläche (33) des rotationssymmetrischen Körpers (32) reflektiert wird, sodass ein dritter Lichtstrahl (40) gebildet wird, welcher parallel zur Mittelachse (34) des rotationssymmetrischen Körpers (32) und somit parallel zur Biegekante (19) ausgerichtet ist und wahlweise direkt oder über weitere Ablenkung auf die Lichterfassungsfläche (30) des optischen Erfassungsmittels (29) gelenkt wird;
   - erfassen des dritten Lichtstrahles (40) durch das optische Erfassungsmittel (29);
   - auswerten des vom optischen Erfassungsmittel (29) erfassten dritten Lichtstrahles (40) und daraus berechnen des aktuellen Biegewinkels (20) des ersten (17) und/oder des zweiten Schenkels (18) des Blechteils (4).

19. Verfahren nach Anspruch 18, **dadurch gekennzeichnet, dass** der erste Lichtstrahl (37) von einer im Wesentlichen punktförmigen Lichtquelle (28), wie etwa einer LED, erzeugt wird, im Wesentlichen parallel zur Mittelachse (34) des rotationssymmetrischen Körpers (32) ausgerichtet ist und ausgehend von der Beleuchtungsvorrichtung (25) auf den rotationssymmetrischen Körper (32) gestrahlt wird, von wo er reflektiert und auf die Oberfläche (24) des Blechteils (4) geleitet wird.

20. Verfahren nach Anspruch 18 oder 19, **dadurch gekennzeichnet, dass** der erste Lichtstrahl (37) nach dem Abstrahlen an der Lichtquelle (26) durch einen Kollimator (50) oder durch einen Parabolspiegel (51) zu einem im Wesentlichen parallelen Lichtbündel geformt wird.

21. Verfahren nach einem der Ansprüche 18 bis 20, **dadurch gekennzeichnet, dass** der dritte Lichtstrahl (40) mittels einem im Winkel (80) von 45° zur Mittelachse (34) des rotationssymmetrischen Körpers (32) angeordneten zweiten Spiegel (76) oder Strahlteiler (75) um einen Winkel (81) von 90° umgelenkt wird, sodass er auf eine im Winkel von 90° zur Mittelachse (34) des rotationssymmetrischen Körpers (32) angeordnete Lichterfassungsfläche (30) des optischen Erfassungsmittels (29) trifft.

22. Verfahren nach einem der Ansprüche 18 bis 21, **dadurch gekennzeichnet, dass** die Beleuchtungsvorrichtung (25) so ausgerichtet ist, dass der erste Lichtstrahl (37) in einem Winkel von 90° zu der Mittelachse (34) des rotationssymmetrischen Körpers (32) abgegeben wird, wobei der erste Lichtstrahl (37) mittels einem im Winkel (73) von 45° zur Mittelachse (34) des rotationssymmetrischen Körpers (32) angeordneten ersten Spiegel (71) oder mittels einem im Winkel (78) von 45° zur Mittelachse (34) des rotationssymmetrischen Körpers (32) angeordneten Strahlteiler (75) um einen Winkel (70) von 90° umgelenkt wird, sodass er im Wesentlichen parallel zur Mittelachse (34) des rotationssymmetrischen Körpers (32) ausgerichtet und auf den rotationssymmetrischen Körper (32) geleitet wird.

23. Verfahren nach einem der Ansprüche 18 bis 22, **dadurch gekennzeichnet, dass** die Lichtstärke des auf das optische Erfassungsmittel (29) einfallenden dritten Lichtstrahles (40) ermittelt wird, wobei der dritte Lichtstrahl (40) auf der Lichterfassungsfläche (30) in Form einer Kreisfläche (41) auftrifft, wobei ein Maximum oder mehrere Maxima der Lichtstärke (46) innerhalb der Kreisfläche (41) ermittelt wird bzw. werden und jeweils durch verbinden des Maximums der Lichtstärke (46) und des Mittelpunktes (45) der Kreisfläche (41) mittels einer Geraden (47), der aktuelle Biegewinkel (20) des Blechstückes abgeleitet wird, da die Gerade (47) im rechten Winkel zur Oberfläche (24) des Blechteils (4) steht.

24. Verfahren nach Anspruch 23, **dadurch gekennzeichnet, dass** mittels Triangulation über den radialen Abstand (52) des Maximums der Lichtstärke (46) an der Kreisfläche (41) zum Mittelpunkt (45) und über einen Radius (53) des als Kugel (35) ausgebildeten rotationssymmetrischen Körpers (32), der Abstand (54) der Oberfläche (24) des Blechteiles (4) zur Mittelachse (34) des rotationssymmetrischen Körpers (32) berechnet wird.

25. Verfahren nach einem der Ansprüche 18 bis 24, **dadurch gekennzeichnet, dass** von einer Vorrichtung (27) zur Erzeugung einer Helligkeitsverteilung der Beleuchtungsvorrichtung (25) der erste Lichtstrahl (37) mit einer streifenförmigen Helligkeitsverteilung auf die Oberfläche (24) des Blechteiles (4) projiziert wird, wobei der von der Oberfläche (24) reflektierte zweite Lichtstrahl (39) auf den rotationssymmetrischen Körper (32) trifft und von diesem als dritter Lichtstrahl (40) reflektiert wird und auf die Lichterfassungsfläche (30) des optischen Erfassungsmittels (29) geleitet wird, wobei der dritte Lichtstrahl (40) auf der Lichterfassungsfläche (30) in Form einer Kreisfläche (41) auftrifft, an welcher die vom Blechteil (4) reflektierten Streifen in einem Winkelabstand (83) zueinander auf der Kreisfläche (41) projiziert werden, wobei der aktuelle Biegewinkel (20) dadurch berechnet wird, dass der Winkelabstand (83) der einzelnen Streifen an der Kreisfläche (41) ermittelt wird.

26. Verfahren nach einem der Ansprüche 18 bis 24, **dadurch gekennzeichnet, dass** von einer Vorrichtung (27) zur Erzeugung einer Helligkeitsverteilung der Beleuchtungsvorrichtung (25) der erste Lichtstrahl (37) mit einer streifenförmigen Helligkeitsverteilung auf die Oberfläche (24) des Blechteiles (4) projiziert wird, wobei der von der Oberfläche (24) reflektierte zweite Lichtstrahl (39) auf den rotationssymmetrischen Körper (32) trifft und von diesem als dritter Lichtstrahl (40) reflektiert wird und auf die Lichterfassungsfläche (30) des optischen Erfassungsmittels (29) geleitet wird, wobei der dritte Lichtstrahl (40) auf der Lichterfassungsfläche (30) in Form einer Kreisfläche (41) auftrifft, an welcher die vom Blechteil (4) reflektierten Streifen in einem Winkelabstand (83) zueinander auf der Kreisfläche (41) projiziert werden, wobei der aktuelle Biegewinkel (20) dadurch berechnet wird, dass der Winkelabstand (83) der einzelnen Streifen an der Kreisfläche (41) ermittelt wird.

27. Verfahren nach einem der Ansprüche 18 bis 26, **dadurch gekennzeichnet, dass** der erste Lichtstrahl (37) von der Beleuchtungsvorrichtung (25) auf eine Filterscheibe (95) abgegeben wird, welche Filterscheibe (95) lichtdurchlässige Bereiche (96) und lichtundurchlässige Bereiche (97) aufweist, welche insbesondere in Form von konzentrischen Kreisen ausgebildet sind, wodurch Ringe mit einer Helligkeitsverteilung auf den rotationssymmetrischen Körper (32) und von dort auf die Oberfläche (24) des Blechteils (4) projiziert werden, wobei die Helligkeitsverteilung an der Oberfläche (24) des Blechteils (4) in Form von Hyperbeln sichtbar werden, wobei ein Scheitelpunkt oder Maximum (99) einer Hyperbel den rechten Winkel der Blechoberfläche auf die Mittelachse (34) des rotationssymmetrischen Körpers (32) markiert und diese Scheitelpunkte der Hyperbeln im optischen Erfassungsmittel (29) als Maxima sichtbar werden.

**Claims**

1. A bending angle measuring device (23) for a bending machine (2), in particular a bending press (3), wherein a sheet metal part (4) that is to be bent is arranged in the bending machine (2), which sheet metal part (4) has a first (17) and a second (18) flank, and a bending edge (19) located between the two flanks (17, 18), wherein the bending angle measuring device (23) has an illumination device (25), with at least one light source (26) and an optical means of detection (29) with a light-detecting surface (30), **characterised in that**, at least one rotationally symmetric body (32) with a reflecting surface (33) is arranged on the bending angle measuring device (23), wherein a central axis (34) of the rotationally symmetric body (32) is arranged such that it is aligned parallel to the bending edge (19), wherein a first light beam (37) transmitted by the illumination device (25) is reflected from the sheet metal part (4), and is directed onto the rotationally symmetric body (32) in form of a second light beam (39), and wherein the second light beam (39) is reflected from the reflecting surface (33) of the rotationally symmetric body (32) and is directed onto the optical means of detection (29), in particular onto its light-detecting surface (30), in form of a third light beam (40).

2. The bending angle measuring device according to claim 1, **characterised in that**, the light-detecting surface (30) of the optical means of detection (29) is arranged standing normal to the central axis (34) of the rotationally symmetric body (32), wherein the centre (44) of the light-detecting surface (30) of the optical means of detection (29) is preferably located on the central axis (34) of the rotationally symmetric body (32).

3. The bending angle measuring device according to one of the preceding claims, **characterised in that**, the illumination device (25), the rotationally symmetric body (32) and the optical means of detection (29) are arranged on a common axis, in particular on the central axis (34) of the rotationally symmetric body (32), parallel to the bending edge (19).

4. The bending angle measuring device according to claim 1, **characterised in that**, on the bending angle measuring device (23) a beam splitter (75) is arranged at an angle (78) of 45°, or a first mirror (71) is arranged at an angle (73) of 45°, to the central axis (34) of the rotationally symmetric body (32), wherein the centre (74) of the first mirror (71) preferably lies on the central axis (34) of the rotationally symmetric body (32), whereby a first light beam (37) generated by the illumination device at an angle (70) of 90° to the central axis (34) is deflected such that it runs essentially parallel to the central axis (34) of the rotationally symmetric body (32), wherein the illumination device (25) is also arranged at an angle (70) of 90° to the central axis (34).

5. The bending angle measuring device according to claim 1 or 4, **characterised in that**, on the bending angle measuring device (23), a beam splitter (75), or a second mirror (76), is arranged at an angle (81) of 45° to the central axis (34) of the rotationally symmetric body (32), wherein the centre (77) of the second mirror (76) preferably lies on the central axis (34) of the rotationally symmetric body (32), whereby the third light beam (40) deflected by the rotationally symmetric body (32) and running parallel to the central axis (34) is deflected through an angle (80) of 90° relative to the central axis (34), wherein the optical means of detection (29) is also arranged at an angle (80) of 90° relative to the central axis (34).

6. The bending angle measuring device according to one of the preceding claims, **characterised in that**, an essentially point-form light source (28), such as, for example, an LED, is embodied in the illumination device (25).

7. The bending angle measuring device according to one of the preceding claims, **characterised in that**, the illumination device (25) comprises a device (27) for purposes of generating a brightness distribution for the first light beam (37).

8. The bending angle measuring device according to one of the preceding claims, **characterised in that**, in the illumination device (25) a collimator (50) or a parabolic mirror (51) is embodied for purposes of generating a parallel beam profile for the first light beam (37).

9. The bending angle measuring device according to one of the preceding claims, **characterised in that**, the optical means of detection (29) comprises a two-dimensional image detector (31).

10. The bending angle measuring device according to one of the preceding claims, **characterised in that**, the rotationally symmetric body (32) is designed as a sphere (35).

11. The bending angle measuring device according to one of the preceding claims, **characterised in that**, the illumination device (25), the rotationally symmetric body (32) and the optical means of detection (29) are at least partially surrounded by a housing (85), wherein an opening is provided in the housing (85) in the vicinity of the rotationally symmetric body (32).

12. The bending angle measuring device according to one of the preceding claims, **characterised in that**, a filter disk (95) is arranged between the illumination device (25) and the rotationally symmetric body (32), which filter disk (95) has transparent regions (96) and opaque regions (97).

13. The bending angle measuring device according to claim 12, **characterised in that**, the transparent regions (96) and the opaque regions (97) of the filter disk (95) are designed in the form of concentric circles.

14. The bending angle measuring device according to one of the preceding claims, **characterised in that**, a disk aperture (100) is designed, which is arranged between the illumination device (25) and the optical means of detection (29), and has aperture openings (101), which are arranged on the outer periphery of the disk aperture (100), and which extend over an angular segment (102), wherein an axis of rotation of the disk aperture (100) is located essentially coaxially with the central axis (34) of the rotationally symmetric body (32).

15. The bending angle measuring device according to claim 14, **characterised in that**, a plurality of aperture openings (101) are embodied, distributed over the full peripheral angle, wherein the segmentation of the aperture openings (101) is matched to the resolution accuracy of the optical means of detection (29).

16. The bending angle measuring device according to one of the preceding claims, **characterised in that**, a strip aperture (105) is embodied, which is arranged directly in front of the optical means of detection (29), and has a central aperture opening (106).

17. A bending machine (2) in particular a bending press (3), comprising a machine frame, an upper (6) and a lower (9) press beam, together with tool holders (7, 10) arranged, that is to say embodied, on the press beam (6, 9), and, accommodated in the tool holders (7, 10) a bending punch (8) and a bending die (11), wherein a sheet metal part (4) that is to be bent is arranged between the bending punch (8) and the bending die (11), whereby a bending edge (19) located between a first (17) and a second (18) flank of the sheet metal part (4) is coincidently located with a working edge (16) of the bending punch (8), together with at least one bending angle measuring device (23), **characterised in that**, the bending angle measuring device (23) is embodied according to one of the preceding claims.

18. A method for purposes of determining a bending angle (20) of a sheet metal part (4), in particular with the use of a bending angle measuring device (23) according to one of the claims 1 to 16, wherein the sheet metal part (4) is deformed by a bending machine (2), whereby a bending edge (19) is formed on the sheet metal part (4) between a first (17) and a second (18) flank, wherein the bending angle measuring device (23) has an illumination device (25) with at least one light source (26), an optical means of detection (29) with a light-detecting surface (30), and an rotationally symmetric body (32) with a central axis (34) and a reflecting surface (33), wherein the central axis (34) of the rotationally symmetric body (32) is arranged aligned parallel to the bending edge (19), wherein the determination of the bending angle (20) of the two flanks (17) relative to one another comprises at least the following steps:

> - emission of a first light beam (37) from the illumination device (25), which first light beam (37) in its path is reflected on a surface (24) of the sheet metal part (4), whereby a second light beam (39) is formed, which is reflected on the reflecting surface (33) of the rotationally symmetric body (32), so that a third light beam (40) is formed, which is aligned parallel to the central axis (34) of the rotationally symmetric body (32) and thus parallel to the bending edge (19), and, as required, is deflected either directly or by way of further deflection onto the light-detecting surface (30) of the optical means of detection (29);
> - detection of the third light beam (40) by the optical means of detection (29);
> - evaluation of the third light beam (40) recorded by the optical means of detection (29), and thereof calculation of the current bending angle (20) of the first (17) and/or second (18) flank of the sheet metal part (4).

19. The method according to claim 18, **characterised in that**, the first light beam (37) is generated by an essentially point-form light source (28), such as, for example, an LED, is aligned parallel to the central axis (34) of the rotationally symmetric body (32), and emanating from the illumination device (25) is beamed onto the rotationally symmetric body (32), whence it is reflected and directed onto the surface (24) of the sheet metal part (4).

20. The method according to claim 18 or 19, **characterised in that**, the first light beam (37), after emission from the light source (26), is formed into an essentially parallel light bundle by means of a collimator (50), or by means of a parabolic mirror (51).

21. The method according to one of the claims 18 to 20, **characterised in that**, the third light beam (40), by means of a second mirror (76), or beam splitter (75), arranged at an angle (80) of 45° to the central axis (34) of the rotationally symmetric body (32), is deflected through an angle (81) of 90°, so that it encounters the light-detecting surface (30) of the optical means of detection (29) arranged at an angle of 90° to the central axis (34) of the rotationally symmetric body (32).

22. The method according to one of the claims 18 to 21, **characterised in that**, the illumination device (25) is aligned such that the first light beam (37) is emitted at an angle of 90° relative to the central axis (34) of the rotationally symmetric body (32), wherein the first light beam (37), by means of a first mirror (71) arranged at an angle (73) of 45° to the central axis (34) of the rotationally symmetric body (32), or by means of a beam splitter (75) arranged at an angle (78) of 45° to the central axis (34) of the rotationally symmetric body (32), is deflected through an angle (70) of 90°, so that it is aligned essentially parallel to the central axis (34) of the rotationally symmetric body (32) and is directed onto the rotationally symmetric body (32).

23. The method according to one of the claims 18 to 22, **characterised in that**, the luminosity of the third light beam (40) incident onto the optical means of detection (29) is determined, wherein the third light beam (40) impinges onto the light-detecting surface (30) in the form of a circular area (41), wherein a maximum, or a plurality of maxima, of the luminosity (46) within the circular area (41) is or are determined, and in each case by connection of the maximum of the luminosity (46) and the central point (45) of the circular area (41) by means of a straight line (47), the current bending angle (20) of the sheet item is derived, since the straight line (47) stands at right angles to the surface (24) of the sheet metal part (4).

24. The method according to claim 23, **characterised in that**, by means of triangulation by way of the radial distance (52) of the maximum of the luminosity (46) in the circular area (41) from the centre point (45), and by way of a radius (53) of the rotationally symmetric body (32) designed as a sphere (35) the distance (54) from the surface (24) of the sheet metal part (4) to the central axis (34) of the rotationally symmetric body (32) is calculated.

25. The method according to one of the claims 18 to 24, **characterised in that**, from a device (27) for purposes of generating a brightness distribution of the illumination device (25) the first light beam (37) is projected with a strip-form brightness distribution onto the surface (24) of the sheet metal part (4), wherein the second light beam (39) reflected from the surface (24) impinges onto the rotationally symmetric body (32) and is reflected from the latter as a third light beam (40) and is directed onto the light-detecting surface (30) of the optical means of detection (29), wherein the third light beam (40) impinges onto the light-detecting surface (30) in the form of a circular area (41), on which the strips reflected from the sheet metal part (4) are projected onto the circular area (41) with an angular separation (83) from one another, wherein the current bending angle (20) is calculated **in that** the angular separation (83) of the individual strips is determined in the circular area (41).

26. The method according to one of the claims 18 to 24, **characterised in that**, from a device (27) for purposes of generating a brightness distribution of the illumination device (25) the first light beam (37) is projected with a strip-form brightness distribution onto the surface (24) of the sheet metal part (4), wherein the second light beam (39) reflected from the surface (24) impinges onto the rotationally symmetric body (32) and is reflected from the latter as a third light beam (40) and is directed onto the light-detecting surface (30) of the optical means of detection (29), wherein the third light beam (40) impinges onto the light-detecting surface (30) in the form of a circular area (41), on which the strips reflected from the sheet metal part (4) are projected onto the circular area (41) with an angular separation (83) from one another, wherein the current bending angle (20) is calculated **in that** the angular separation (83) of the individual strips is determined in the circular area (41).

27. The method according to one of the claims 18 to 26, **characterised in that**, the first light beam (37) from the illumination device (25) is emitted onto a filter disk (95), which filter disk (95) has transparent regions (96) and opaque regions (97), which in particular are designed in the form of concentric circles, whereby rings with a brightness distribution are projected onto the rotationally symmetric body (32), and from there onto the surface (24) of the sheet metal part (4), wherein the brightness distribution can be seen on the surface (24) of the sheet metal part (4) in the form of hyperbolas, wherein a vertex or maximum (99) of a hyperbola marks the right angle of the sheet surface onto the central axis (34) of the rotationally symmetric body (32), and these vertices of the hyperbolas are visible in the optical means of detection (29) as maxima.

## Revendications

1. Dispositif de mesure d'angle de pliage (23) pour une machine de pliage (2), plus particulièrement une presse plieuse (3), une pièce en tôle (4) à plier étant disposée dans la machine de pliage (2), cette pièce en tôle (4) comprenant une première (17) et une deuxième branche (18) et une arête de pliage (19) se trouvant entre les deux branches (17, 18), le dispositif de mesure d'angle de pliage (23) comprenant un dispositif d'éclairage (25) avec au moins une source de lumière (26) et un moyen de détection optique (29) avec une surface de détection de lumière (30), **caractérisé en ce que**, sur le dispositif de mesure d'angle de pliage (23), est disposé au moins un corps à symétrie de rotation (32) avec une surface réfléchissante (33), un axe central (34) du corps à symétrie de rotation (32) étant parallèle à l'arête de pliage (19), un premier rayon lumineux (37) émis par le dispositif d'éclairage (25) étant réfléchi par la pièce en tôle (4) et étant conduit, en tant que deuxième rayon lumineux (39) vers le corps à symétrie de rotation (32) et le deuxième rayon lumineux (39) étant réfléchi à la surface réfléchissante du corps à symétrie de rotation (32) et étant conduit en tant que troisième rayon lumineux (40) vers le moyen de détection optique (29), plus particulièrement vers sa surface de détection de lumière (30).

2. Dispositif de mesure d'angle de pliage selon la revendication 1, **caractérisé en ce que** la surface de détection de lumière (30) du moyen de détection optique (29) est disposé perpendiculairement à l'axe central (34) du corps à symétrie de rotation (32), le centre (44) de la surface de détection de lumière (30) du moyen de détection optique (29) se trouvent de préférence sur l'axe central (34) du corps à symétrie de rotation (32).

3. Dispositif de mesure d'angle de pliage selon l'une des revendications précédentes, **caractérisé en ce que** le dispositif d'éclairage (25), le corps à symétrie de rotation (32) et le moyen de détection optique (29) sont disposés sur un axe commun, plus particulièrement sur l'axe central (34) du corps à symétrie de rotation (32) parallèlement à l'arête de pliage (19).

4. Dispositif de mesure d'angle de pliage selon la revendication 1, **caractérisé en ce que**, sur le dispositif de mesure d'angle de pliage (23) se trouve un diviseur de rayonx (75) avec un angle (78) de 45° ou un premier miroir (71) avec un angle (73) de 45° par rapport à l'axe central (34) du corps à symétrie de rotation (32), le centre (74) du premier miroir (71) se trouvant de préférence sur l'axe central (34) du corps à symétrie de rotation (32), ce qui permet de faire en sorte qu'un premier rayon lumineux (37) généré par le dispositif d'éclairage (25) avec un angle (70) de 90° par rapport à l'axe central (34) soit dévie de façon à ce qu'il soit globalement parallèle à l'axe central (34) du corps à symétrie de rotation (32), le dispositif d'éclairage (25) étant également disposé à un angle (70) de 90° par rapport à l'axe central (34).

5. Dispositif de mesure d'angle de pliage selon la revendication 1 ou 4, **caractérisé en ce que**, sur le dispositif de mesure d'angle de pliage (23) se trouve un diviseur de rayons (75) ou un deuxième miroir (76) avec un angle (81) de 45° par rapport à l'axe central (34) du corps à symétrie de rotation (32), le centre (77) du deuxième miroir (76) se trouvant de préférence sur l'axe central (34) du corps à symétrie de rotation (32), ce qui permet de faire en sorte que le troisième rayon lumineux (40) dévié par le corps à symétrie de rotation (32) et s'étendant parallèlement à l'axe central (34), soit dévié avec un angle (80) de 90° par rapport à l'axe central (34), le moyen de détection optique (29) étant également disposé à un angle (80) de 90° par rapport à l'axe central (34).

6. Dispositif de mesure d'angle de pliage selon l'une des revendications précédentes, **caractérisé en ce que**, dans le dispositif d'éclairage (25) est réalisée une source de lumière (28) globalement ponctuelle, comme une LED.

7. Dispositif de mesure d'angle de pliage selon l'une des revendications précédentes, **caractérisé en ce que** le dispositif d'éclairage (25) comprend un dispositif (27) permettant de générer une distribution de luminosité du premier rayon lumineux (37).

8. Dispositif de mesure d'angle de pliage selon l'une des revendications précédentes, **caractérisé en ce que**, dans le dispositif d'éclairage (25) est réalisé un collimateur (50) ou un miroir parabolique (51) pour la génération d'un trajet parallèle du premier rayon lumineux (37).

9. Dispositif de mesure d'angle de pliage selon l'une des revendications précédentes, **caractérisé en ce que** le moyen de détection optique (29) comprend un capteur d'image bidimensionnel (31).

10. Dispositif de mesure d'angle de pliage selon l'une des revendications précédentes, **caractérisé en ce que** le corps à symétrie de rotation (32) présente une forme sphérique (35).

11. Dispositif de mesure d'angle de pliage selon l'une des revendications précédentes, **caractérisé en ce que** le dispositif d'éclairage (25), le corps à symétrie de rotation (32) et le moyen de détection optique (29) sont entourés au moins partiellement par un boîtier (85), une cavité étant prévue dans le boîtier (85) au niveau du corps à symétrie de rotation (32).

12. Dispositif de mesure d'angle de pliage selon l'une des revendications précédentes, **caractérisé en ce que**, entre le dispositif d'éclairage (25) et le corps à symétrie de rotation (32), est disposé un disque de filtre (95) qui présente des zones transparentes (96) et des zones opaques (97).

13. Dispositif de mesure d'angle de pliage selon la revendication 12, **caractérisé en ce que** les zones transparentes (96) et les zones opaques (97) du disque de filtre (95) sont conçues sous la forme de cercles concentriques.

14. Dispositif de mesure d'angle de pliage selon l'une des revendications précédentes, **caractérisé en ce qu'**un diaphragme à disque (100) est réalisé, qui est disposé entre le dispositif d'éclairage (25) et le moyen de détection optique (29) et qui comprend des ouvertures de diaphragme (101), qui sont disposées sur la circonférence extérieure du diaphragme à disque (100) et s'étendent sur un segment angulaire (102), un axe de rotation du diaphragme à disque (100) étant globalement coaxial avec l'axe central (34) du corps à symétrie de rotation (32).

**15.** Dispositif de mesure d'angle de pliage selon la revendication 14, **caractérisé en ce que** plusieurs ouvertures de diaphragme (101) sont réparties sur toute la circonférence, la segmentation des ouvertures du diaphragme (101) étant adaptée à la précision de résolution du moyen de détection optique (29).

**16.** Dispositif de mesure d'angle de pliage selon l'une des revendications précédentes, **caractérisé en ce qu'**un diaphragme à bande (105) est réalisé, qui est disposé directement devant le moyen de détection optique (29) et qui comprend une ouverture de diaphragme centrale (106).

**17.** Machine de pliage (2), plus particulièrement presse plieuse (3), comprenant un châssis de machine, une barre de pression supérieure (6) et une barre de pression inférieure (9) ainsi que des logements d'outils (7, 10) disposés ou réalisés sur les barres de pression (6, 9) et, dans les logements d'outils (7, 10), sont logés un poinçon de pliage (8) et une matrice de pliage (11), une pièce en tôle (4) à plier étant disposée entre le poinçon de pliage (8) et la matrice de pliage (11), ce qui permet de faire en sorte qu'une arête de pliage (19) se trouvant entre une première branche (17) et une deuxième branche (18) de la pièce en tôle (4) coïncide avec une arête de travail (16) du poinçon de pliage (8), ainsi qu'au moins un dispositif de mesure d'angle de pliage (23), **caractérisé en ce que** le dispositif de mesure d'angle de pliage (23) est conçu selon l'une des revendications précédentes.

**18.** Procédé de détermination d'un angle de pliage (20) d'une pièce en tôle (4), plus particulièrement à l'aide d'un dispositif de mesure d'angle de pliage (23) selon l'une des revendications 1 à 16, la pièce en tôle (4) étant déformée par une machine de pliage (2), ce qui permet de faire en sorte qu'une arête de pliage (19) se forme sur la pièce en tôle (4) entre une première (17) et une deuxième branche (18), le dispositif de mesure d'angle de pliage (23) comprenant un dispositif d'éclairage (25) avec au moins une source de lumière (26), un moyen de détection optique (29) avec une surface de détection de lumière (30) et un corps à symétrie de rotation (32) avec un axe central (34) et une surface réfléchissante (33), l'axe central (34) du corps à symétrie de rotation (32) étant parallèle à l'arête de pliage (19), la détermination de l'angle de pliage (20) des deux branches (17) entre elles comprenant au moins les étapes suivantes :

- émission d'un premier rayon lumineux (37) par le dispositif d'éclairage (25), ce premier rayon lumineux (37) étant réfléchi sur son trajet au niveau d'une surface (24) de la pièce en tôle (4), ce qui permet d'obtenir un deuxième rayon lumineux (39), qui est réfléchi au niveau de la surface réfléchissante (33) du corps à symétrie de rotation (32), de façon à générer un troisième rayon lumineux (40) qui est parallèle à l'axe central (34) du corps à symétrie de rotation (32) et donc parallèle à l'arête de pliage (19) et est dévié, directement pour par l'intermédiaire d'une déviation supplémentaire, vers la surface de détection de lumière (30) du moyen de détection optique (29) ;
- détection du troisième rayon lumineux (40) par le moyen de détection optique (29) ;
- analyse du troisième rayon lumineux (40) détecté par le moyen de détection optique (29) et calcul, à partir de cette analyse, de l'angle de pliage (20) actuel de la première (17) et/ou de la deuxième branche (18) de la pièce en tôle (4).

**19.** Procédé selon la revendication 18, **caractérisé en ce que** le premier rayon lumineux (37) est généré par une source de lumière (28) globalement ponctuelle, comme une LED, est orientée globalement parallèlement à l'axe central (34) du corps à symétrie de rotation (32) et est émis à partir du dispositif d'éclairage (25) vers le corps à symétrie de rotation (32), où il est réfléchi et conduit vers la surface (24) de la pièce en tôle (4).

**20.** Procédé selon la revendication 18 ou 19, **caractérisé en ce que** le premier rayon lumineux (37) est formé, après l'émission au niveau de la source de lumière (26), par un collimateur (50) ou par un miroir parabolique (51) en un faisceau lumineux globalement parallèle.

**21.** Procédé selon l'une des revendications 18 à 20, **caractérisé en ce que** le troisième rayon lumineux (40) est dévié, au moyen d'un deuxième miroir (76) ou d'un diviseur de rayons (75), disposé avec un angle (80) de 45° par rapport à l'axe central (34) du corps à symétrie de rotation (32), d'un angle (81) de 90°, de façon à ce qu'il rencontre une surface de détection de lumière (30) du moyen de détection optique (29) avec un angle de 90° par rapport à l'axe central (34) du corps à symétrie de rotation (32).

**22.** Procédé selon l'une des revendications 18 à 21, **caractérisé en ce que** le dispositif d'éclairage (25) est orienté de façon à ce que le premier rayon lumineux (37) est émis à un angle de 90° par rapport à l'axe central (34) du corps à symétrie de rotation (32), le premier rayon lumineux (37) étant dévié, au moyen d'un premier miroir (71) disposé à un angle (73) de 45° par rapport à l'axe central (34) du corps à symétrie de rotation (32) ou au moyen d'un diviseur de rayons (75) disposé à un angle (78) de 45° par rapport à l'axe central (34) du corps à symétrie de rotation (32), d'un angle (70) de 90°, de façon à ce qu'il soit globalement parallèle à l'axe central (34) du corps à symétrie de rotation (32) et à ce qu'il soit conduit vers le corps à symétrie de rotation (32).

23. Procédé selon l'une des revendications 18 à 22, **caractérisé en ce que** l'intensité lumineuse du troisième rayon lumineux (40) arrivant sur le moyen de détection optique (29) est déterminée, le troisième rayon lumineux (40) arrivant sur la surface de détection de lumière (30) sous la forme d'une surface circulaire (41), un maximum ou plusieurs maxima de l'intensité lumineuse (46) étant déterminé(s) à l'intérieur de la surface circulaire (41) et l'angle de pliage (20) actuel de la pièce en tôle étant déduite en reliant le maximum de l'intensité lumineuse (46) et le centre (45) de la surface circulaire (41) au moyen d'une droite (47), car la droite (47) est perpendiculaire à la surface (24) de la pièce en tôle (4).

24. Procédé selon la revendication 23, **caractérisé en ce qu'**une triangulation par l'intermédiaire de la distance radiale (52) entre le maximum de l'intensité lumineuse (46) sur la surface circulaire (41) et le centre (45) et par l'intermédiaire d'un rayon (53) du corps à symétrie de rotation (32) conçu sous la forme d'une sphère (35) permet de calculer la distance (54) entre la surface (24) de la pièce en tôle (4) et l'axe central (34) du corps à symétrie de rotation (32).

25. Procédé selon l'une des revendications 18 à 24, **caractérisé en ce que** le premier rayon lumineux (37) avec une distribution de luminosité en forme de bandes est projeté sur la surface (24) de la pièce en tôle (4) par un dispositif (27) pour la production d'une distribution de luminosité du dispositif d'éclairage (25), le deuxième rayon lumineux (39) réfléchi par la surface (24) arrivant sur le corps à symétrie de rotation (32) et étant réfléchi par celui-ci sous la forme d'un troisième rayon lumineux (40) et étant conduit vers la surface de détection de lumière (30) du moyen de détection optique (29), le troisième rayon lumineux (40) arrivant sur la surface de détection de lumière (30) sous la forme d'une surface circulaire (41), sur laquelle les bandes réfléchies par la pièce en tôle (4) sont projetées avec une distance angulaire (83) entre elles sur la surface circulaire (41), l'angle de pliage (20) actuel étant calculé en déterminant la distance angulaire (83) des différentes bandes sur la surface circulaire (41).

26. Procédé selon l'une des revendications 18 à 24, **caractérisé en ce que** le premier rayon lumineux (37) avec une distribution de luminosité en forme de bandes est projeté sur la surface (24) de la pièce en tôle (4) par un dispositif (27) pour la production d'une distribution de luminosité du dispositif d'éclairage (25), le deuxième rayon lumineux (39) réfléchi par la surface (24) arrivant sur le corps à symétrie de rotation (32) et étant réfléchi par celui-ci sous la forme d'un troisième rayon lumineux (40) et étant conduit vers la surface de détection de lumière (30) du moyen de détection optique (29), le troisième rayon lumineux (40) arrivant sur la surface de détection de lumière (30) sous la forme d'une surface circulaire (41), sur laquelle les bandes réfléchies par la pièce en tôle (4) sont projetées avec une distance angulaire (83) entre elles sur la surface circulaire (41), l'angle de pliage (20) actuel étant calculé en déterminant la distance angulaire (83) des différentes bandes sur la surface circulaire (41).

27. Procédé selon l'une des revendications 18 à 26, **caractérisé en ce que** le premier rayon lumineux (37) est émis par le dispositif d'éclairage (25) vers un disque de filtre (95), ce disque de filtre (95) comprenant des zones transparentes (96) et des zones opaques (97), qui sont conçues plus particulièrement sous la forme de cercles concentriques, des anneaux avec une distribution de luminosité étant ainsi projetés sur le corps à symétrie de rotation (32) et de là sur la surface (24) de la pièce en tôle (4), la distribution de luminosité à la surface (24) de la pièce en tôle (4) étant visible sous la forme d'hyperboles, un sommet ou un maximum (99) d'une hyperbole marquant l'angle droit de la surface de la tôle sur l'axe central (34) du corps à symétrie de rotation (32) et ces sommets des hyperboles étant visibles sous la forme de maxima dans le moyen de détection optique (29).

Fig.1

**Fig.2**

**Fig.3**

**Fig.4**

**Fig.5**

Fig.6

Fig.7

**Fig.8**

**Fig.9**

# Fig.10

# Fig.11

**Fig.12**

**Fig.13**

**Fig.14**

# Fig.15

# Fig.16

**Fig.17**

**Fig.18**

**Fig.19**

83

20

**Fig.20**

20

83

Fig.21

EP 3 172 530 B1

## Fig.22

## Fig.23

# Fig.24

47                    47

20

# Fig.25

99                20                99

**Fig.26**

**Fig.27**

**Fig.28**

**Fig.29**

**Fig.30**

**IN DER BESCHREIBUNG AUFGEFÜHRTE DOKUMENTE**

**In der Beschreibung aufgeführte Patentdokumente**

- EP 0915320 B1
- JP 2002059217 A